(19) Europäisches Patentamt
European Patent Office
Office européen des brevets

(11) EP 3 892 669 A1

(12) **EUROPÄISCHE PATENTANMELDUNG**

(43) Veröffentlichungstag:
**13.10.2021 Patentblatt 2021/41**

(21) Anmeldenummer: **20168560.9**

(22) Anmeldetag: **07.04.2020**

(51) Int Cl.:
***C08G 77/20*** *(2006.01)* ***C08G 77/04*** *(2006.01)*
***C07F 7/08*** *(2006.01)* *C08G 101/00* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **PolyU GmbH**
**46147 Oberhausen (DE)**

(72) Erfinder: **Die Erfindernennung liegt noch nicht vor**

(74) Vertreter: **Hemsath, Lars et al**
**König-Szynka-Tilmann-von Renesse**
**Patentanwälte Partnerschaft mbB**
**Mönchenwerther Straße 11**
**40545 Düsseldorf (DE)**

(54) **ISOCYANATFREIE KETTVERLÄNGERUNG UND VERNETZUNG MITTELS FUNKTIONELLER SILANE**

(57) Die Erfindung betrifft ein Verfahren zur Herstellung von polymeren, Organosilanhaltigen Verbindungen durch Umsetzung isocyanatreaktiver Verbindungen (P) mit speziellen Silan-Verbindung (S), die daraus erhältlichen Polymer-Verbindungen, sowie deren Verwendung in der Herstellung ungeschäumter Polymere, von Weichschäumen und/oder Zwei-Komponenten (2K)-Systeme sowie deren Verwendung in CASE-Bereich (Beschichtungen, Klebstoffe, Dichtungen und Elastomere), Möbeln, Matratzen, Autositzen, Dichtungs- oder Akustikmaterialien, zur Isolation von Fernwärmerohren, Tanks und Pipelines sowie zur Herstellung aller Arten von Kühlvorrichtungen.

EP 3 892 669 A1

## Beschreibung

Die Erfindung betrifft ein Verfahren zur Herstellung von polymeren, Organosilanhaltigen Verbindungen durch Umsetzung isocyanatreaktiver Verbindungen (P) mit speziellen Silan-Verbindung (S), die daraus erhältlichen polymeren Verbindungen (V), sowie deren Verwendung in der Herstellung ungeschäumter Polymere, von Weichschäumen und/oder Zwei-Komponenten (2K)-Systeme sowie deren Verwendung in CASE-Bereich (Beschichtungen, Klebstoffe, Dichtungen und Elastomere), Möbeln, Matratzen, Autositzen, Dichtungs- oder Akustikmaterialien, zur Isolation von Fernwärmerohren, Tanks und Pipelines sowie zur Herstellung aller Arten von Kühlvorrichtungen.

Die Urethanreaktion von Isocyanaten mit hydroxyfunktionalisierten Verbindungen (z.B. Polyolen) ist lange bekannt. Je nach Funktionalität der hydroxyfunktionalisierten Verbindungen oder des Isocyanats werden langkettige Polyurethane (Kettenverlängerung) oder vernetzte Polyurethane (Vernetzung) erhalten. Polyurethane können je nach Wahl des Isocyants und des Polyols unterschiedliche Eigenschaften aufweisen.

Im Wesentlichen werden die späteren Eigenschaften durch die Polyolkomponente bestimmt, da zum Erreichen gewünschter Eigenschaften üblicherweise nicht die Isocyanatkomponente angepasst (chemisch verändert) wird, sondern die Polyolkomponente. Abhängig von Kettenlänge und Anzahl der Verzweigungen im Polyol können mechanische Eigenschaften beeinflusst werden. So führt beispielsweise der Einsatz von Polyesterpolyolen zusätzlich zu den üblichen Polyetherpolyolen zu besserer Standfestigkeit. Grund dafür ist, dass Polyesterpolyole einen höheren Schmelzpunkt haben und somit beim Applizieren des Polyurethans erstarren.

Die Polyurethanbildung erfordert mindestens zwei verschiedene Monomere, im einfachsten Fall ein Diol und ein Diisocyanat. Die Verknüpfung erfolgt durch die Reaktion einer Isocyanatgruppe (-N=C=O) eines Moleküls mit einer Hydroxygruppe (-OH) eines anderen Moleküls unter Bildung einer Urethangruppe (-NH-CO-O-). Die Polyurethanreaktion verläuft in Stufen. Zunächst entsteht aus Diol und Diisocyanat ein bifunktionelles Molekül mit einer Isocyanatgruppe (-N=C=O) und einer Hydroxygruppe (-OH). Dieses kann an beiden Enden mit weiteren Monomeren reagieren. Dabei entstehen kurze Molekülketten, sogenannte Oligomere oder Prepolymere. Diese können mit weiteren Monomeren, anderen Oligomeren oder bereits gebildeten Polymere reagieren. Durch einen Überschuss von Diisocyanat können lineare Polyurethane vernetzt werden.

Mit dem Einsatz von Polyetherpolyolen in den 50er Jahren wuchs die Bedeutung der Polyurethane rasch an. Die größeren Variationsmöglichkeiten bei der Herstellung von Polyetherpolyolen führten zu einer erheblichen Ausdehnung der Anwendungen. Bis zum Jahr 2002 ist der weltweite Verbrauch auf rund 9 Millionen Tonnen Polyurethan angestiegen, bis 2007 stieg er weiter auf über 12 Millionen Tonnen. Die jährliche Zuwachsrate beträgt ca. 5 %.

Isocyanate sind jedoch umwelt- und gesundheitstechnisch bedenklich. Sie können Allergien auslösen und stehen im Verdacht, Krebs zu verursachen. Atemwegserkrankungen, die durch Isocyanate ausgelöst werden, können als Berufkrankheit (BK1315) anerkannt werden. Arbeitnehmer, die regelmäßig Isocyanaten ausgesetzt sind, müssen an arbeitsmedizinischen Vorsorgeuntersuchungen teilnehmen. Um eine inhalative Exposition zu vermeiden, werden oftmals die niedermolekularen Vertreter in den vielen Anwendungen durch schwerflüchtige Derivate ersetzt.

Weitere Reduktionen oder gar eine Vermeidung von Isocyanaten ist daher wünschenswert. Neben Maßnahmen in der Reaktionsführung oder Zugabe von Hilfsstoffen zur Reduktion von Isocyanaten und Vermeidung von Expositionen, können auch substituierende Maßnahmen auf chemischer Ebene durchgeführt werden.

Im Stand der Technik werden dazu oftmals (Tri-)Alkoxy-funtionalisierte Silane eingesetzt. Silane sind dem Grunde nach als Haftvermittler und Vernetzer bekannt. Vornehmlich wurden unterschiedliche funktionelle Silane hierfür in der Silikonchemie eingesetzt.

Tri-Alkoxy-funktionelle Silane werden unter dem Namen Dynasylan® (Evonik) unter anderem auch zur Vernetzung von Polymeren wie Silikonen, Polyether, Epoixdharze, Polyethylen, Polyacrylat oder Polyurethan ein. Die Vernetzung findet dabei in Gegenwart von Feuchtigkeit statt. Das Tri-Alkoxy-funktionelle Vinyl-Silan Vinyltrimethoxysilan wird beispielsweise zur Vernetzung sowie zur Kettenverlängerung OH-funktioneller Verbindungen unter dem Namen Silquest A-171® (Momentive) angeboten.

EP 3 309 187 A1 beschreibt ebenfalls eine feuchtigkeitshärtende Zusammensetzung, wobei Alkoxysilane zum Einsatz kommen.

In der EP 1 509 533 A1 wird ein Verfahren zur Herstellung von organischen Polyolsilanen durch Vereinigung eines Alkoxysilans mit einem oder mehreren organischen Polyolen offenbart.

Nachteilig bei der Reaktion von Alkoxy-funktionellen Silanen (Alkoxysilanen) mit hydroxyfunktionellen Verbindungen, wie beispielsweise Polyolen sind die vergleichsweise schlechten Reaktivitäten bzw. mäßigen Umsetzungen - daher benötigen diese Reaktionen hohe Reaktionstemperaturen (>100 °C) für einen akzeptablen Umsatz. Auch können sie sich nachteilig auf die mechanischen Eigenschaften der daraus resultierenden Polymer-Werkstoffe auswirken.

Eine Aufgabe der vorliegenden Erfindung ist es deshalb, ein Verfahren bereitzustellen, das mindestens einen der oben genannten Nachteile überwindet. Insbesondere ist es die Aufgabe isocyanatreaktive Verbindungen, wie z.B. hydroxyfunktionellen Verbindungen Isocyanat-frei zu verknüpfen, entweder in einer Kettenverlängerung und/oder in der Vernetzung dieser Verbindungen.

Erfindungsgemäß wird die Aufgabe gelöst durch ein Verfahren nach Anspruch 1. Vorteilhafte Weiterentwicklungen sind Gegenstand der Unteransprüche oder der nebengeordneten Ansprüche.

Gegenstand der Erfindung ist somit ein Verfahren zur Herstellung von polymeren Verbindungen (V) unter Ausbildung von Si-O-C Bindungen durch Umsetzung isocyanatreaktiver Verbindungen (P), mit mindestens einer Silan-Verbindung (S) der allgemeinen Formel $Si(R)_m(R^a)_{4-m}$, dadurch gekennzeichnet, dass

- R unabhängig voneinander H, eine optional substituierte, geradkettige oder verzweigte C1- bis C16-Alkylgruppe, eine optional substituierte, geradkettige oder verzweigte C2- bis C16-Alkenylgruppe und/oder eine optional, substituierte C4- bis C14-Arylgruppe bedeutet und m eine ganze Zahl von 0 bis 2 ist oder eine Alkoxygruppe bedeuten kann, wenn m = 1 oder 2 ist,

- $R^a$ unabhängig voneinander ausgewählt ist aus der Gruppe bestehend aus

  - einem Hydroxycarbonsäureesterrest mit der allgemeinen Strukturformel (A):

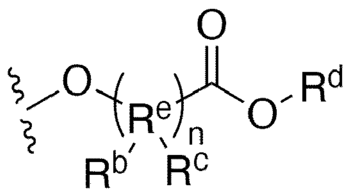

(A),

wobei

$R^b$ unabhängig voneinander H oder eine optional substituierte, geradkettige oder verzweigte C1- bis C16-Alkylgruppe oder eine optional substituierte C4- bis C14-Arylgruppe, bedeutet,

$R^c$ unabhängig voneinander H oder eine optional substituierte, geradkettige oder verzweigte C1- bis C16-Alkylgruppe oder eine optional substituierte C4- bis C14-Arylgruppe, bedeutet,

$R^d$ H oder eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,

$R^e$ ein Kohlenstoffatom oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet und

n eine ganze Zahl von 1 bis 10 ist,

  - einem Hydroxycarbonsäureamidrest mit der allgemeinen Strukturformel (B),

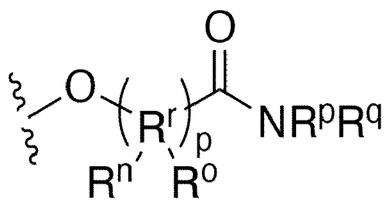

(B),

wobei

$R^n$ unabhängig voneinander H oder eine optional substituierte, geradkettige oder verzweigte C1- bis C16-

Alkylgruppe oder eine optional substituierte C4- bis C14-Arylgruppe, bedeutet,

$R^o$ unabhängig voneinander H oder eine optional substituierte, geradkettige oder verzweigte C1- bis C16-Alkylgruppe oder eine optional substituierte C4- bis C14-Arylgruppe, bedeutet,

$R^p$ und $R^q$ unabhängig voneinander H oder eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,

$R^r$ ein Kohlenstoffatom oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und

p eine ganze Zahl von 1 bis 10 ist,

- einem Oximrest mit der allgemeinen Strukturformel (C),

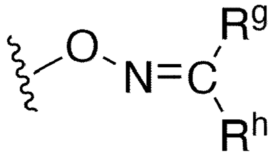

(C),

wobei
$R^g$ und $R^h$ unabhängig voneinander H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,

- einem Carbonsäureamidrest -N($R^i$)-C(O)-$R^j$,
wobei

R’ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und

$R^j$ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,

- einem Carbonsäurerest -O-C(O)-$R^f$,
wobei
$R^f$ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe bedeutet,
und/oder

- einem Aminrest -NH($R^l$),
wobei

$R^l$ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und

Rj H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder

eine optional substituierte C5- bis C15-Aralkylgruppe, bedeutet.

In einer altrernativen Ausführungsform des erfindungsgemäßen Verfahrens sind die Silan-Verbindung (S) Oligomere oder Polymere, in welcher

$R^a$ unabhängig voneinander ausgewählt ist aus der Gruppe bestehend aus einem Hydroxycarbonsäureesterrest mit der allgemeinen Strukturformel (A'),

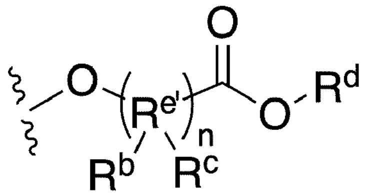

(A'),

wobei

$R^b$ und $R^c$ nicht H bedeuten,
$R^b$ nicht H und $R^c$ nicht Methyl- bedeuten,
$R^b$ nicht Methyl- und $R^c$ nicht H bedeuten,
$R^d$ wie oben definiert ist,
n = 1 ist und
$R^{e'}$ ein Kohlenstoffatom bedeutet.

Insbesondere sind Gegenstand der vorliegenden Erfindung die polymeren Verbindungen (V) erhältlich nach dem erfindungsgemäßen Verfahren.

Überraschenderweise wurde gefunden, dass durch das erfindungsgemäße Verfahren kettenverlängerte und/oder vernetzte polymere Verbindungen, ohne den Einsatz von Isocyanaten in einer Urethanreaktion, bereitgestellt werden können. Das Verfahren ermöglicht daher einen Ersatz der üblichen Polyurethane sowie den Verzicht auf (Poly)Isocyanten in deren Herstellung.

Die kettenverlängerten polymeren Verbindungen (V) können optional in einem nachfolgenden Schritt in einer weiteren Reaktion mit Silan-Verbindungen (S) oder mittels Isocyanaten zu vernetzten polymeren Verbindungen (V) umgesetzt werden. Geeignete Isocyanate stellen Diisocyanate, Triisocyanate oder Mischungen davon dar, insbesondere IPDI, MDI, HDI, TDI, davon abgeleitete Isocyanate oder Mischungen davon. Alternativ können kettenverlängerte polymere Verbindungen (V), ebenfalls zuvor hergestellt in einem erfindungsgemäßen Verfahren, mit Isocyanatosilanen zu silylierten polymeren Verbindungen (SiV) umgesetzt werden. Diese silylierten polymeren Verbindungen (SiV) lassen sich wiederum aushärten (= vernetzen), insbesondere durch Feuchtigkeitseinfluss. Somit können die Eigenschaften von polymeren Verbindungen (V) weiter vorteilhaft beeinflusst und/oder verbessert werden.

Die Erfindung erlaubt es daher ein Verfahren zur Herstellung von polymeren Verbindungen (V), beispielsweise für die Verwendung im Bereich ungeschäumter Polymere oder Weichschäume sowie für den CASE-Bereich (Beschichtungen, Klebstoffe, Dichtungen und Elastomere) bereitzustellen, wobei auf den Einsatz von Isocyanaten verzichten werden kann.

Vorteilhafterweise kann dabei die Reaktionstemperatur gesenkt und dennoch eine gute Reaktivtät gewährleistet werden. So lässt sich bei dem erfindungsgemäßen Verfahren eine vorteilhafte Umsetzung bereits bei 80 °C oder auch bereits bei Raumtemperatur verzeichnen.

Weiterhin konnte festgestellt werden, dass ein Molgewichtsaufbau kommerziell erhältlicher Polyole ermöglicht wird. Abhängig vom Einsatz der Polyole und späterer Verarbeitung lassen sich so die gewünschten bzw. benötigten höheren Molgewichte mittels des erfindungsgemäßen Verfahrens Isocyanat-frei realisieren.

Auch lassen sich die mechanischen Eigenschaften der resultierenden Polymer-Werkstoffe (ob geschäumt oder ungeschäumt) durch die Verwendung polymeren Verbindungen (V), erhältlich nach dem erfindungsgemäßen Verfahren, beeinflussen. So sind beispielsweise die mit den erfindungsgemäß erhältlichen polymeren Verbindungen (V) hergestellten ungeschäumten Polymer-Werkstoffe im Vergleich zu isocyanat-vernetzten Polymerwerkstoffen weicher und weisen daher eine geringere Shore A-Härte auf.

Gegenstand der Erfindung ist somit auch die Verwendung polymerer Verbindungen, erhältlich nach dem erfindungsgemäßen Verfahren, zur Bereitstellung von Polymer-Werkstoffen - ungeschäumten Polymer-Werkstoffen mit

- einer Bruchdehnung von 10 - 1000 %
- einer Shore A Härte von 0 - 100

und Weichschäumen mit

- einer Bruchdehnung von 10 - 500 %
- einer Shore A Härte von 0 - 80.

In einer vorteilhaften Ausführungsform des erfindungsgemäßen Verfahrens ist es bevorzugt, dass eine Kettenverlängerung der isocyanatreaktiven Verbindung (P) resultiert. Dazu wird bevorzugt die Silan-Verbindung (S), wie oben definiert, im Unterschuss zu (P) eingesetzt, bezogen auf die eingesetzten Mengen in Mol.

Bevorzugt werden für eine Kettenverlängerung der isocyanatreaktiven Verbindung (P) die Verbindungen (S) und (P) in einem Molverhältnis (Mol) von mindestens 1 : 1,1, bevorzugt von mindestens 1 : 2, besonders bevorzugt von mindestens 1 : 3, ganz besonders bevorzugt von 1 : 2,2 oder 1 : 3,3 und insbesondere von 1 : 4,2 eingesetzt. Ebenfalls insbesondere im Bereich von 1 : 1,2 bis 1 : 2,5.

In einer weiteren vorteilhaften Ausführungsform der Herstellung der erfindungsgemäßen polymeren Verbindungen (V) ist es bevorzugt, dass eine Vernetzung der isocyanatreaktiven Verbindung (P) resultiert. Dazu wird bevorzugt die Silan-Verbindung (S), wie oben definiert, zu gleichen Teilen wie (P) oder im Überschuss zu (P) eingesetzt, bezogen auf die eingesetzten Mengen in Mol.

Bevorzugt werden für eine Vernetzung der isocyanatreaktiven Verbindung (P) die Verbindungen (S) und (P) in einem Molverhältnis (Mol) von mindestens 1 : 1 oder 1,1 : 1, bevorzugt von mindestens 1,4 : 1, besonders bevorzugt von mindestens 1,5 : 1 bis 3 : 1 eingesetzt und ganz besonders bevorzugt in einem Molverhältnisbereich von 1,5 : 1 bis 6 : 1 eingesetzt.

Ganz besonders bevorzugt ist es, wenn ein Acetoxy-Silan zu (P) in einem Molverhältnis von 1 : 3 eingesetzt wird oder wenn ein Oxim-Silan zu (P) in einem Molverhältnisbereich von 1,5 : 1 bis 3 : 1 vorliegt.

**Definitionen**

Im Sinne der Erfindung sind Silan-Verbindungen (S) funktionalisierte Silane (kurz: Silane) welche mindestens zwei durch Hydrolyse abspaltbare Gruppen aufweisen. Sie können aufgrund ihrer Reaktivität alternativ als "Vernetzer", "Härter" oder "Silan-Vernetzer" bezeichnet werden.

Unter "polymeren Verbindungen" (kurz: V) werden im Sinne der Erfindung jegliche Reaktionsprodukte bezeichnet, welche erhältlich sind nach dem erfindungsgemäßen Verfahren. Unter den Oberbegriff fallen sowohl kettenverlängerte isocyanatreaktive Verbindungen als auch vernetzte isocyanatreaktive Verbindungen.

"Kettenverlängerung" bedeutet allgemein ein Prozess bzw. eine Reaktion bezeichnet, wobei Monomere, Oligomere und/oder Polymere sich entweder direkt miteinander verbinden und dadurch "länger" werden oder durch eine verknüpfende Verbindung aneinander verbunden werden und ebenfalls durch "länger" werden. Eine Kettenverlängerung einer Verbindung z.B. einer hydroxyfunktionalisierten Verbindung (P) wie eines Polyols bewirkt einen Molgewichtsaufbau. Im Weiteren kann dies u.a. auch zu einem Viskositätsanstieg dieser Verbindungen führen.

"Hydroxycarbonsäureester-Silane" oder "Hydroxycarbonsäureester-Vernetzer" sind Vernetzer der allgemeinen Formel $Si(R)_m(R^a)_{4-m}$, wobei m = 0, 1 oder 2 sein kann und $R^a$ ein Hydroxycarbonsäureesterrest mit der allgemeinen Strukturformel (A) und wie unten definiert ist.

"Hydroxycarbonsäureamid-Silane" oder "Hydroxycarbonsäureamid-Vernetzer" sind Vernetzer der allgemeinen Formel $Si(R)_m(R^a)_{4-m}$, wobei m = 0, 1 oder 2 sein kann und $R^a$ ein Hydroxycarbonsäureamidrest mit der allgemeinen Strukturformel (B) und wie unten definiert ist.

"Oxim-Silane" oder "Oxim-Vernetzer" sind Vernetzer der allgemeinen Formel $Si(R)_m(R^a)_{4-m}$, wobei m = 0, 1 oder 2 sein kann und $R^a$ ein Oximrest mit der allgemeinen Strukturformel (C) und wie unten definiert ist.

"Carbonsäureamid-Silane" oder "Carbonsäureamid-Vernetzer" sind Vernetzer der allgemeinen Formel $Si(R)_m(R^a)_{4-m}$, wobei m = 0, 1 oder 2 sein kann und $R^a$ ein Carbonsäureamidrest der allgemeinen Formel $-N(R^i)-C(O)-R^j$ ist, wobei $R^j$ wie unten definiert ist.

"Acetat-Silane" oder "Acetat-Vernetzer" sind Vernetzer der allgemeinen Formel $Si(R)_m(R^a)_{4-m}$, wobei m = 0, 1 oder 2 sein kann und $R^a$ ein Essigsäurerest mit der allgemeinen Formel $-O-C(O)-R^f$ ist, wobei $R^f$ Methyl- ist.

"Amin-Silane" oder "Amin-Vernetzer" sind Vernetzer der allgemeinen Formel $Si(R)_m(R^a)_{4-m}$, wobei 0, 1 oder 2 sein kann und $R^a$ ein Aminrest mit der allgemeinen Formel $-NH(R^l)$ ist, wobei $R^l$ wie unten definiert ist.

Erfindungsgemäß kann auch ein Gemisch aus mindestens zwei unterschiedlichen Silan-Verbindungen ein- und umgesetzt werden. Beispielsweise kann eine Kombination aus einem Acetat-Silan und einem Oxim-Silanen oder Kombination aus zwei unterschiedlichen Oxim-Silanen eingesetzt werden. Der Einsatz von Mischungen von Silan-Verbindungen in der Vernetzung von hydroxyfunktionalisierten Polymeren (Polyolen) kann vorteilhafte Eigenschaften

aufweisen. So kann beispielsweise der Anteil einer toxikologisch bedenklichen, übelriechenden und/oder teuren Silan-Verbindung gesenkt werden. Insbesondere kann die Kombination von unterschiedlichen Silan-Verbindungen die Eigenschaften der resultierenden polymeren Verbindungen (V) beeinflussen. Aufgrund der unterschiedlichen Reaktivitäten der Silan-Verbindungen können so die Materialeigenschaften der resultierenden Polymer-Werkstoffe entsprechend gesteuert werden.

Dem Fachmann ist bekannt, dass es in Mischungen verschiedener Silan-Verbindungen (S) der allgemeinen Formel $Si(R)_m(R^a)_{4-m}$, auch zu Austauschreaktionen zwischen den verschiedenen Gruppen $R^a$ der verschiedenen Silan-Verbindungen kommen kann. Diese Austauschreaktionen können insbesondere bis zu einem Gleichgewichtszustand ablaufen. Dieser Prozess kann auch als Equilibrierung bezeichnet werden.

Geeignete **Silan-Verbindungen (S)** im Sinne der Erfindung sind Silane der allgemeinen Formel $Si(R)_m(R^a)_{4-m}$, wobei jeder R und $R^a$ wie oben definiert sind.

Besonders geeignete Silan-Verbindungen (S) sind Oxim-Silane und/oder Acetoxy-Silane:

• **Oxim-Silane**

In der allgemeinen Strukturformel (C) ist der Oximrest über das Sauerstoffatom der Hydroxygruppe an das Siliciumatom gebunden.

In einer bevorzugten Ausführungsform des erfindungsgemäßen Verfahrens ist

R unabhängig voneinander ausgewählt aus der Gruppe bestehend aus Vinyl-, Methyl-, Ethyl-, n-Propyl, Isopropyl-, n-Butyl-, Isobutyl-, sec-Butyl, tert-Butyl, Isobutyl-, 2-Ethylhexyl- oder Phenyl- und

$R^a$ unabhängig voneinander ausgewählt aus einem Oximrest der allgemeinen Struktur (C), wobei $R^g$ und $R^h$ unabhängig voneinander ausgewählt sind aus der Gruppe bestehend aus Vinyl-, Methyl-, Ethyl-, n-Propyl, Isopropyl-, n-Butyl-, Isobutyl , sec-Butyl, tert-Butyl, Isobutyl-, 2-Ethylhexyl- oder Phenyl-,

wobei m = 0 oder 1 ist.

In einer besonders bevorzugten Ausführungsform des erfindungsgemäßen Verfahrens ist

R unabhängig voneinander ausgewählt aus der Gruppe bestehend aus Vinyl-, Methyl-, Ethyl- oder n-Propyl und

$R^a$ unabhängig voneinander ausgewählt aus einem Oximrest der allgemeinen Struktur (C), wobei $R^g$ und $R^h$ unabhängig voneinander ausgewählt sind aus der Gruppe bestehend aus Methyl-, Ethyl- oder n-Propyl,

wobei m = 0 oder 1 ist.

In einer alternativen Ausführungsform weist die im erfindungsgemäßen Verfahren eingesetzte Silan-Verbindung (S) mit der allgemeinen Strukturformel $Si(R)_m(R^a)_{4-m}$, in der m = 0 ist, die allgemeine Strukturformel ($C_1$) auf

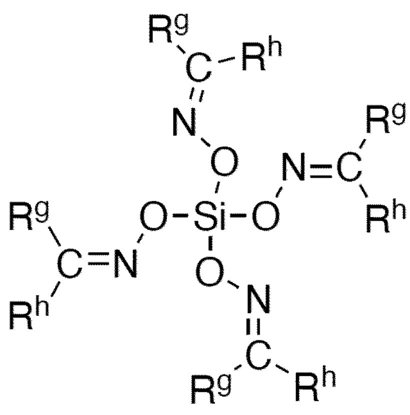

($C_1$),

in welcher

$R^g$ und $R^h$ unabhängig voneinander ausgewählt sind aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl- und Phenyl-.

Bevorzugt ist $R^g$ und $R^h$ unabhängig voneinander ausgewählt aus der Gruppe bestehend aus Methyl- und Ethyl-, n-Propyl.

Besonders bevorzugt sind die Ausführungsformen, in welchen

$R^g$ n-Propyl- ist und $R^h$ Methyl- ist;
$R^g$ Ethyl- ist und $R^h$ Methyl- ist;
$R^g$ Methyl- und $R^h$ Isobutyl- ist;
$R^g$ und $R^h$ jeweils Methyl- sind oder
$R^g$ und $R^h$ jeweils Ethyl- sind.

Ganz besonders bevorzugt sind die Silanverbindungen (S) Tetra(2-pentanonoximo)silan, Tetra(2-butanonoximo)silan, Tetra(2-propanonoximo)silan, Tetra(3-pentanonoximo)silan oder Tetra(4-Methyl-2-pentanonoximo)silan.
In weiteren alternativen Ausführungsform weist die Silan-Verbindung (S) mit der allgemeinen Strukturformel $Si(R)_m(R^a)_{4-m}$, in der m = 1 ist, die allgemeine Strukturformel ($C_2$) auf

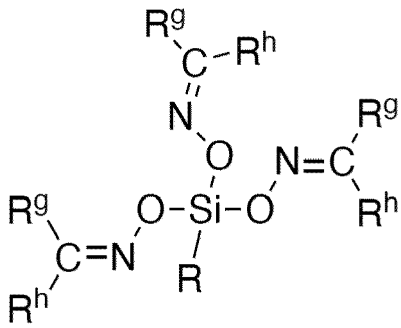

($C_2$),

in welcher

R unabhängig voneinander ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl-, Phenyl-, Methoxy- oder Ethoxy-,

$R^g$ und $R^h$ unabhängig voneinander ausgewählt sind aus der Gruppe bestehend aus Methyl-, Ethyl-, n-Propyl, Isopropyl-, n-Butyl-, Isobutyl-, 2-Ethylhexyl-, Vinyl- und Phenyl-.

Bevorzugt ist hierbei R ausgewählt aus der Gruppe bestehend aus Methyl-, Ethyl-Vinyl-, Phenyl- und Methoxy-, besonders bevorzugt aus Vinyl-, Methyl-, Phenyl- und/oder Methoxy sowie
$R^g$ und $R^h$ sind besonders bevorzugt unabhänig voneinander ausgewählt aus der Gruppe bestehend aus Methyl-, Ethyl-, n-Propyl-, und Isobutyl-.
Ganz besonders bevorzugt sind die Ausführungsformen in welchen

R Vinyl- ist, $R^g$ n-Propyl- und $R^h$ Methyl- ist;
R Methyl- ist, $R^g$ n-Propyl- und $R^h$ Methyl- ist;
R Ethyl- ist, $R^g$ n-Propyl- und $R^h$ Methyl- ist;
R Ethyl- ist, $R^g$ n-Propyl- und $R^h$ Methyl- ist;
R n-Propyl- ist, $R^g$ n-Propyl- und $R^h$ Methyl- ist;
R Phenyl- ist, $R^g$ n-Propyl- und $R^h$ Methyl- ist;
R Vinyl- ist, $R^g$ und $R^h$ jeweils Methyl- ist;
R Methyl- ist, $R^g$ und $R^h$ jeweils Methyl- ist;
R Ethyl- ist, $R^g$ und $R^h$ jeweils Methyl- ist;
R n-Propyl- ist, $R^g$ und $R^h$ jeweils Methyl- ist;
R Phenyl- ist, $R^g$ und $R^h$ jeweils Methyl- ist;
R Vinyl- ist, $R^g$ Ethyl- und $R^h$ Methyl- ist;
R Methyl- ist, $R^g$ Ethyl- und $R^h$ Methyl- ist;
R Ethyl- ist, $R^g$ Ethyl- und $R^h$ Methyl- ist;
R n-Propyl- ist, $R^g$ Ethyl- und $R^h$ Methyl- ist;
R Phenyl- ist, $R^g$ Ethyl- und $R^h$ Methyl- ist;
R Vinyl- ist, $R^g$ und $R^h$ jeweils Ethyl- sind;
R Methyl- ist, $R^g$ und $R^h$ jeweils Ethyl- sind;
R Ethyl- ist, $R^g$ und $R^h$ jeweils Ethyl- sind;

R n-Propyl- ist, $R^g$ und $R^h$ jeweils Ethyl- sind;
R Phenyl- ist, $R^g$ und $R^h$ jeweils Ethyl- sind;
R Vinyl- ist, $R^g$ Methyl- und $R^h$ Isobutyl- ist;
R Methyl- ist, $R^g$ Methyl- und $R^h$ Isobutyl- ist;
R Ethyl- ist, $R^g$ Methyl- und $R^h$ Isobutyl- ist;
R n-Propyl- ist, $R^g$ Methyl- und $R^h$ Isobutyl- ist oder
R Phenyl- ist, $R^g$ Methyl- und $R^h$ Isobutyl- ist.

Insbesondere bevorzugt sind die Silanverbindungen (S) Vinyl-tris(2-pentanonoximo)silan, Methyl-tris(2-pentanonoximo)silan, Ethyl-tris(2-pentanonoximo)silan, Propyl-tris(2-pentanonoximo)silan, Phenyl-tris(2-pentanonoximo)silan, Vinyl-tris(2-propanoximo)silan, Methyl-tris(2-propanoximo)silan, Ethyl-tris(2-propanoximo)silan, Propyl-tris(2-propanoximo)silan, Phenyl-tris(2-propanoximo)silan, Vinyl-tris(2-butanonoximo)silan, Methyl-tris(2-butanonoximo)silan, Ethyl-tris(2-butanonoximo)silan, Propyl-tris(2-butanonoximo)silan, Phenyl-tris(2-butanonoximo)silan, Vinyl-tris(3-pentanonoximo)silan, Methyl-tris(3-pentanonoximo)silan, Ethyl-tris(3-pentanonoximo)silan, Propyl-tris(3-pentanonoximo)silan, Phenyl-tris(3-pentanonoximo)silan, Vinyl-tris(4-Methyl-2-pentanonoximo)silan, Methyl-tris(4-Methyl-2-pentanonoximo)silan, Ethyl-tris(4-Methyl-2-pentanonoximo)silan, Propyl-tris(4-Methyl-2-pentanonoximo)silan oder Phenyl-tris(4-Methyl-2-pentanonoximo)silan.

Es wurde gefunden, dass Silan-Verbindungen der Struktur ($C_2$) positive Eigenschaften für Dichtstoffformulierungen aufweisen. So weisen die resultierenden ausgehärteten Dichtstoffe verbesserte mechanische Eigenschaten auf - Shore A-Härten von mindestens 3 und eine Reißdehnung von mindestens 40 %. Dichtstoffe mit diesen Silan-Verbindungen weisen ferner ein farbloses und transparentes Erscheinen auf.

In weiteren alternativen Ausführungsform weist die Silan-Verbindung (S) mit der allgemeinen Strukturformel $Si(R)_m(R^a)_{4-m}$, in der m = 2 ist, die allgemeine Strukturformel ($C_3$) auf

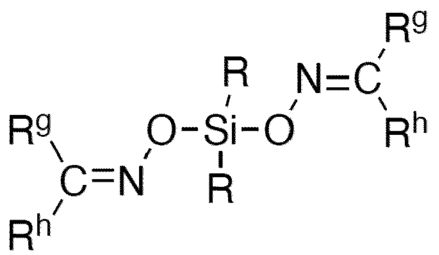

($C_3$),

in welcher

R unabhängig voneinander ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl-, Phenyl-, Methoxy- oder Ethoxy- und
$R^g$ und $R^h$ unabhängig voneinander ausgewählt sind aus der Gruppe bestehend aus Methyl-, Ethyl-, n-Propyl, Isopropyl-, n-Butyl-, Isobutyl-, 2-Ethylhexyl-, Vinyl- und Phenyl-.

Bevorzugt ist R ausgewählt aus der Gruppe bestehend aus Methyl-, Ethyl- Vinyl-, Phenyl- und Methoxy-, besonders bevorzugt aus Vinyl-, Methyl-, Phenyl- und/oder Methoxy und
$R^g$ und $R^h$ bevorzugt unabhänig voneinander ausgewählt sind aus der Gruppe bestehend aus Methyl-, Ethyl-, n-Propyl-, und Isobutyl-, besonders bevorzugt aus der Gruppe bestehend aus Methyl-, Ethyl- und n-Propyl-.

Ganz besonders bevorzugt sind die Ausführungsformen in welchen
R unabhängig voneinander Vinyl- oder Methyl- ist, $R^g$ und $R^h$ jeweils Methyl- sind;
R unabhängig voneinander Vinyl- oder Methyl- ist, $R^g$ Ethyl- und $R^h$ Methyl- ist;
R unabhängig voneinander Vinyl-oder Methyl- ist, $R^g$ n-Propyl- und $R^h$ Methyl- ist;
R unabhängig voneinander Vinyl- oder Methyl- ist, $R^g$ und $R^h$ jeweils Ethyl- sind;
R unabhängig voneinander Vinyl- oder Methoxy- ist, $R^g$ und $R^h$ jeweils Methyl- sind;
R unabhängig voneinander Vinyl- oder Methoxy- ist, $R^g$ Ethyl- und $R^h$ Methyl- ist;
R unabhängig voneinander Vinyl- oder Methoxy- ist, $R^g$ n-Propyl- und $R^h$ Methyl- ist;
R unabhängig voneinander Vinyl- oder Methoxy- ist, $R^g$ und $R^h$ jeweils Ethyl- sind;
R unabhängig voneinander Vinyl- oder Phenyl- ist, $R^g$ und $R^h$ jeweils Methyl- sind;
R unabhängig voneinander Vinyl- oder Phenyl- ist, $R^g$ Ethyl- und $R^h$ Methyl- ist;
R unabhängig voneinander Vinyl- oder Phenyl- ist, $R^g$ n-Propyl- und $R^h$ Methyl- ist oder

R unabhängig voneinander Vinyl- oder Phenyl- ist, $R^g$ und $R^h$ jeweils Ethyl- sind.

Insbesondere bevorzugt sind die Silanverbindungen (S) Methylvinyl-di-(2-propanonoximo)silan, Methylvinyl-di-(2-butanonoximo)silan, Methylvinyl-di-(2-pentanonoximo)silan, Methylvinyl-di-(3-pentanonoximo)silan, Methoxyvinyl-di-(2-propanonoximo)silan, Methoxyvinyl-di-(2-butanonoximo)silan, Methoxyvinyl-di-(2-pentanonoximo)silan, Methoxyvinyl-di-(3-pentanonoximo)silan, Phenylvinyl-di-(2-propanonoximo)silan, Phenylvinyl-di-(2-butanonoximo)silan, Phenylvinyl-di-(2-pentanonoximo)silan oder Phenylvinyl-di-(3-pentanonoximo)silan.

Der Einsatz von Oxim-Silanen als Silan-Verbindung (S) im erfindungsgemäßen Verfahren zur Herstellung von vernetzten polymeren Verbindungen (V) sind besonders bevorzugt.

Silan-Verbindungen (S) mit der allgemeinen Strukturformel ($C_2$) sind ganz besonders bevorzugt im erfindungsgemäßen Verfahren zur Herstllung von vernetzten polymeren Verbindungen (V).

• **Acetoxy-Silane**

Eine alternative Ausführungform der allgemeinen Strukturformel $Si(R)_m(R^a)_{4-m}$ in der jeder Rest $R^a$ verschieden sein kann, wenn mehrere Reste $R^a$ an das Siliciumatom gebunden sind,
steht $R^a$ für ein Carbonsäurerest -O-C(O)-$R^f$,
in welchem das Sauerstoffatom der Hydroxygruppe an das Siliciumatom gebunden ist und

R unabhängig voneinander ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl-, Phenyl-, Methoxy- oder Ethoxy-,

$R^f$ unabhängig voneinander ausgewählt ist aus der Gruppe bestehend aus Methyl-, Ethyl-, n-Propyl, Isopropyl-, n-Butyl-, Isobutyl-, 2-Ethylhexyl-, Vinyl-oder Phenyl- und

m eine ganze Zahl von 0 bis 2 ist.

Bevorzugt ist R unabhängig voneinander ausgewählt aus der Gruppe bestehend aus Methyl-, Ethyl-, n-Propyl-, Phenyl- oder Vinyl-, sowie
$R^f$ ist bevorzugt unabhänig voneinander ausgewählt aus der Gruppe bestehend aus Methyl-, Ethyl-, besonders bevorzugt Methyl- und
bevorzugt ist m = 1 oder 2, besonders bevorzugt ist m = 1.

Ganz besonders bevorzugt sind die Ausführungsformen in welchen
m = 1 ist, R Vinyl- und $R^f$ Methyl- ist;
m = 1 ist, R Methyl- und $R^f$ Methyl- ist;
m = 1 ist, R Ethyl- und $R^f$ Methyl- ist;
m = 1 ist, R n-Propyl- und $R^f$ Methyl- ist oder
m = 1 ist, R Phenyl- und $R^f$ Methyl- ist.

Insbesondere bevorzugt sind die Silanverbindungen (S) Vinyltriacetoxysilan, Methyltriacetoxysilan, Ethyltriacetoxysilan, Propyltriacetoxysilan oder Phenyltriacetoxysilan.

Es ist bekannt, dass solche Acetoxy-Silane besonders positive Eigenschaften für Dichtstoffformulierungen aufweisen können, insbesondere in Bezug auf die toxikologische Unbedenklichkeit.

In einer bevorzugten Ausführungsform der Erfindung umfasst das Verfahren eine Kombination der Silan-Verbindungen (S) Vinyltriacetoxysilan und Methyltriacetoxysilan.

In einer bevorzugten Ausführungsform der Erfindung umfasst das Verfahren eine Kombination der Silan-Verbindungen (S) Methyltriacetoxysilan und Ethyltriacetoxysilan.

In einer bevorzugten Ausführungsform der Erfindung umfasst das Verfahren eine Kombination der Silan-Verbindungen (S) Ethyltriacetoxysilan und Propyltriacetoxysilan.

In einer weiter bevorzugten Ausführungsform der Erfindung umfasst das Verfahren nur Vinyltriacetoxysilan als Silan-Verbindung (S).

In einer alternativen bevorzugten Ausführungsform der Erfindung umfasst das Verfahren nur Methyltriacetoxysilan als Silan-Verbindung (S).

In einer alternativen bevorzugten Ausführungsform der Erfindung umfasst das Verfahren nur Ethyltriacetoxysilan als Silan-Verbindung (S).

In einer alternativen bevorzugten Ausführungsform der Erfindung umfasst das Verfahren nur Propyltriacetoxysilan als Silan-Verbindung (S).

Der Einsatz von Acetoxy-Silanen als Silan-Verbindung (S) im erfindungsgemäßen Verfahren zur Herstellung von kettenverlängerten polymeren Verbindungen (V) sind ganz besonders bevorzugt.

In einer weiteren ganz besonders bevorzugten Ausführungsform ist die Silan-Verbindung (S) ausgewählt aus der Gruppe bestehend aus Oxim-Vernetzern wie Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan

oder Mischungen daraus oder aus Acetat-Vernetzern wie Methyltriacetoxysilan oder Ethyltriacetoxysilan oder Mischungen daraus.

In einer äußerst bevorzugten Aufführungsform ist die Silan-Verbindung (S) ausgewählt aus der Gruppe bestehend aus Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus oder ist Methyltriacetoxysilan.

Mit der Bezeichnung "Alkylgruppe" ist eine gesättigte Kohlenwasserstoffkette gemeint. Alkylgruppen weisen insbesondere die allgemeine Formel $-C_nH_{2n+1}$ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1-bis C16-Alkylgruppen sind Methyl-, Ethyl-, n-Propyl-, n-Butyl-, Isopropyl-, Isobutyl-, sec-Butyl-, tert-Butyl-, n-Pentyl- und Ethylhexyl. Entsprechend bezeichnet eine "C1-bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen, die nicht geradkettig sind, in denen also insbesondere die Kohlenwasserstoffkette eine Gabelung aufweist. Beispiele für verzweigte Alkylgruppen sind Isopropyl-, Isobutyl-, sec-Butyl-, tert-Butyl-, sec-Pentyl-, 3-Pentyl-, 2-Methylbutyl-, Isopentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel $-C_nH_{2n-1}$ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

"Arylgruppen" bezeichnen monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht speziell angegeben ist.

Eine "aromatische Gruppe" bezeichnet cyclische, planare Kohlenwasserstoffe mit aromatischem System. Eine aromatische Gruppe mit 4 bis 14 C-Atomen bezeichnet insbesondere eine aromatische Gruppe, die 4 bis 14 Kohlenstoffatome enthält. Die aromatische Gruppe kann insbesondere monocyclisch, bicyclisch oder tricyclisch sein. Eine aromatische Gruppe kann ferner auch 1 bis 5 Heteroatome ausgewählt aus der Gruppe bestehend aus N, O, und S enthalten. Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispielen jeweils die notwendige Anzahl an Wasserstoffatomen entfernt ist, um eine Eingliederung in die entsprechende Strukturformel zu ermöglichen.

Eine "Cycloalkylgruppe" bezeichnet einen Kohlenwasserstoffring, der nicht aromatisch ist. Insbesondere bezeichnet eine Cycloalkylgruppe mit 4 bis 14 C-Atomen einen nicht-aromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppel- oder Dreifachbindung auf, wobei die Cycloalkylgruppe jedoch nicht aromatisch ist. Cycloalkylgruppen können insbesondere auch substituiert sein, auch wenn dies nicht speziell angegeben ist.

Eine "Aralkylgruppe" bezeichnet eine durch eine Arylgruppe substituierte Alkylgruppe. Eine "C5- bis C15-Aralkylgruppe" bezeichnet insbesondere eine Aralkylgruppe mit 5 bis 15 Kohlenstoffatomen, wobei darin sowohl die Kohlenstoffatome der Alkylgruppe als auch der Arylgruppe enthalten sind. Beispiele für Aralkylgruppen sind Benzylund Phenylethyl. Aralkylgruppen können insbesondere auch substituiert sein, auch wenn dies nicht spezielle angegeben ist.

Ein "cyclisches Ringsystem" bezeichnet einen Kohlenwasserstoffring, der nicht aromatisch ist. Insbesondere bezeichnet ein cyclisches Ringsystem mit 4 bis 14 C-Atomen ein nicht-aromatisches Kohlenwasserstoffringsystem mit 4 bis 14 Kohlenstoffatomen. Ein cyclisches Ringsystem kann aus einem einzelnen Kohlenwasserstoffring (monocyclisch), aus zwei Kohlenwasserstoffringen (bicyclisch) oder aus drei Kohlenwasserstoffringen (tricyclisch) bestehen. Insbesondere können cyclische Ringsysteme auch 1 bis 5 Heteroatome, bevorzugt ausgewählt aus der Gruppe bestehend aus N, O, und S enthalten.

"Gesättigte cyclische Ringsysteme" sind nicht aromatisch und weisen auch keine Doppel- oder Dreifachbindungen auf. Beispiele für gesättigte cyclische Ringsysteme sind Cyclopentan, Cyclohexan, Decalin, Norbornan und 4H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HOR*-CH3, wobei R* ein cyclisches Ringsystem mit 6 Kohlenstoffatomen, insbesondere Cyclohexan, ist, zwei Wasserstoffatome von dem cyclischen Ringsystem, insbesondere von Cyclohexan, entfernt sein, um eine Eingliederung in die Strukturformel zu erlauben.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1- bis C4-Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette verbunden ist.

Die "Reißfestigkeit" gehört zu den durch verschiedene Prüfmethoden bestimmbaren mechanischen Eigenschaften von Polymeren. Sie ist der Quotient ($\sigma_R$) aus der im Augenblick des Reißens gemessenen Kraft $F_R$ und dem Anfangsquerschnitt $A_0$ des Probekörpers.

Die "Reißdehnung" ist das Verhältnis der Längenänderung zur Ausgangslänge nach dem Bruch des Prüfkörpers. Sie drückt die Fähigkeit eines Werkstoffes aus, Formänderungen ohne Rissbildung zu widerstehen. Sie ist der Quotient ($\varepsilon_R$) aus der im Augenblick des Reißens gemessenen Änderung $L_R$ - $L_0$, der Messlänge $L_R$ und der Anfangsmesslänge $L_0$ des Probekörpers.

Der "Spannungswert" ist der Quotient ($\sigma_i$) aus der bei Erreichen einer bestimmten Dehnung vorhandenen Zugkraft $F_i$ und dem Anfangsquerschnitt $A_0$

Die Bestimmung von Zugfestigkeit, Reißdehnung und Spannungswerten im Zugversuch werden nach DIN 53504:2017-03 ermittelt.

Das "Rückstellvermögen" beschreibt die Tendenz eines flexiblen Trägers, die ursprünglichen Maße ganz oder teilweise wieder anzunehmen, nachdem die Kräfte aufgehoben wurden, welche die Ausdehnung oder Verformung verursacht haben. Das mittlere Rückstellvermögen wird gemäß der DIN EN ISO 7389:2004-04 bestimmt.

"Shore-Härte" ist eine gängige Angabe der Härte eines elastischen Stoffs. Sie wird mittels eines Shore-Härte-Prüfers (Durometer) geprüft umfassend einen federbelasteten Stift aus gehärtetem Stahl. Dessen Eindringtiefe in das zu prüfende Material ist ein Maß für die Shore-Härte, die auf einer Skala von 0 Shore (2,5 Millimeter Eindringtiefe) bis 100 Shore (0 Millimeter Eindringtiefe) gemessen wird. Eine hohe Zahl bedeutet also eine große Härte. Es wird je nach zur Messung verwendetem Kegelstumpf, welcher in die Probe drückt, nach Shore A-, Shore B-, Shore C- und Shore D-Härte unterschieden.

Der Wert "Shore A" wird angegeben bei Elastomeren, nach Messung mit einer Nadel mit abgestumpfter Spitze. Die Stirnfläche des Kegelstumpfs hat einen Durchmesser von 0,79 Millimetern, der Öffnungswinkel beträgt 35°. Auflagegewicht: 1 kg, Haltezeit: 15 s. Handmessgeräte müssen meist sofort beim Aufdrücken auf die Probe abgelesen werden, der angezeigte Wert nimmt bei längerer Haltezeit ab. Der Wert 0 für die Shore A-Härte entspricht in etwa der Festigkeit von Gelantine, der Wert 10 der Festigkeit eines Gummibärchens. Werte von 50-70 entsprechen der Festigkeit von Autoreifen und der Shore A-Wert von 100 beschreibt die Härte von Hartplastik. Die Shore A-Härte wird bestimmt gemäß ASTM D2240-15.

"Dichtungsmittel" oder "Dichtungsmassen" bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien.

Der Begriff "Dichtstoff" wie hierhin verwendet beschreibt die ausgehärtete erfindungsgemäße Zusammensetzung nach einem der Ansprüche.

Die Bezeichnung "Klebstoff" bezieht sich auf Stoffe, die Flügelteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

"Beschichtungsmittel" sind alle Mittel zum Beschichten einer Oberfläche.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

Erfindungsgemäß wird unter "Raumtemperatur" ein Temperaturbereich von 20-25 °C verstanden.

In einer Ausführungsform der Erfindung läuft das Verfahren bei Temperturen von 20 bis 100 °C oder von 20 bis 40 °C ab, bevorzugt bei Temperaturen von 75 bis 85 °C oder von 20 bis 35 °C ab.

Die Bezeichnung "Katalysator" bezeichnet einen Stoff, der die Aktivierungsenergie einer bestimmten Reaktion herabsetzt und dadurch die Reaktionsgeschwindigkeit erhöht bzw. eine Reaktion überhaupt ermöglicht.

Optional können Katalysatoren im erfindungsgemäßen Verfahren eingesetzt werden. Geeignete Katalysatoren stellt die nachfolgende Gruppe dar, bestehend aus Metall-Silsesquioxanen wie Heptaisobutyl POSS-Titanium(IV)-Ethoxid (TiPOSS), Heptaisobutyl POSS-Zinn(IV)-Ethoxid (SnPOSS) oder Mischungen daraus, Tetraalkyltitanaten, wie Tetramethyltitanat, Tetraethyltitanat, Tetra-n-propyltitanat, Tetra-isopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate $((R^{\#}O)_2TiO_2$, worin $R^{\#}$ z.B. für Isopropyl, n-Butyl, Isobutyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Diisobutoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminium-sec-butyat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylzinnmercaptide, Dibutylzinnmercaptide, Dioctylzinnmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodecanoat, Gemische aus Bismut- und Zinkcarboxylaten, Reaktionsprodukte von Calcium-Salzen und organischen Carbonsäuren (Carboxylate) wie Calcium-bis(2-ethylhexanoat) oder Calcium-neodecanoat, Reaktionsprodukte von Natrium-Salzen und organischen Carbonsäuren (Carboxylate) wie Natrium(2-ethylhexanoat) oder Natrium-neodecanoat, Gemische aus Calcium- und Natriumcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen oder Mischungen davon, Katalysatoren auf Basis stickstoffhaltiger Verbindungen wie Butylamin, Octylamin, Dibutylamin, Monoethanolamin, Diethanolamin, Triethanolamin, Diethylentriamin,Oleylamin, Cyclohexylamin, Benzylamin, Diethylaminopropylamin, Xylylendiamin, Triethylendiamin, Tetramethylguanidin, 2-Guanidinobenzimidazol, Acetylacetoneguanidin, 1,3-Di-o-tolylguanidin, 2-tert.Butyl-1,1,3,3-tetramethylguanidin, Diphenylguanidin, 2,4,6,-Tris)dimethylaminomethyl)phenol, Morpholin, N-Methylmorpholin, 2-Ethyl-4-Methylimidazol und 1,8-Diazabicylo(5.4.0)undecen-7 (DBU), 1,5-Diazabicyclo[4.3.0]non-5-en (DBN), 6-Dibutylamino-1,8-diazabicyclo[5.4.0]undec-7-en, Salze dieser Verbindungen mit Carbonsäuren oder anderen Säuren oder Mischungen davon, bevorzugt ausgewählt aus Metall-Silsequioxanen, Bismut-, Zink-, Aluminium-, Calcium-, Natrium-, und/oder Zirkonium-Carboxylaten, ganz besonders bevorzugt ausgewählt aus Heptaisobutyl POSS-Titanium(IV)-Ethoxid (TiPOSS), Heptaisobutyl POSS-Zinn(IV)-Ethoxid (SnPOSS), Dibutylzinndilaurat (DBTL), Zinn(II)-2-ethylhexanoat (Zinnoctoat), Zink(II)-2-ethylhexanoat, Zink(II)-neodecanoat (Zinn-Neodecanoat), Bismut(III)-tris(2-ethylhexonat), Bismut(III)-tris(neodecanoat) (Bismut-Neodecanoat), Diisobutoxy-bis(ethylacetylacetonat)titanat, Titantetraisopropylat, Titan-tetrabutylat, Aluminium-sec-butylat, Zirkonium-tetraisopropylat, Zirkonium-tetrabutylat, Calcium-bis(2-ethylhexanoat), Natrium(2-ethylhexanoat) oder Mischungen davon, äußerst bevorzugt Heptaisobutyl POSS-Titanium(IV)-Ethoxid (TiPOSS), Heptaisobutyl POSS-Zinn(IV)-Ethoxid (SnPOSS), Dibutylzinndilaurat (DBTL), Bismut(III)-tris(neodecanoat), Bismut(III)-tris(2-ethylhexonat), Diisobutoxy-bis(ethylacetylacetonat)titanat oder Mischungen davon, äußerst bevorzugt Heptaisobutyl POSS-Titanium(IV)-Ethoxid (TiPOSS), Dibutylzinndilaurat (DBTL), Bismut(III)-tris(neodecanoat), Diisobutoxy-bis(ethylacetylacetonat)titanat oder Mischungen davon.

"Metall-Silsesquioxane" sind kettenförmige Metall-Siloxan-Silanol(-at)-Verbindungen welche linear, verzweigt und/oder ein Käfig bilden.

Unter einem "Käfig" oder einer oligomeren oder polymeren "Käfigstruktur" wird im Sinne der Erfindung eine dreidimensionale Anordnung der kettenförmigen Metall-Siloxan-Silanol(-at)-Verbindung verstanden, wobei einzelne Atome der Kette die Eckpunkte einer vielflächigen Grundstruktur der Verbindung bilden. Hierbei werden durch die miteinander verknüpften Atome mindestens zwei Flächen aufgespannt, wobei eine gemeinsame Schnittmenge entsteht. In einer Ausführungsform der Verbindung bildet sich beispielsweise eine würfelförmige Grundstruktur der Verbindung aus. Eine Einkäfig-Struktur oder auch singulär vorliegende KäfigStruktur, also eine Verbindung, die sich über einen vereinzelt vorliegenden Käfig definiert.

Der Begriff "kernig" schreibt erfindungsgemäß die Kernigkeit einer Verbindung, wie viele Metall-Atome darin enthalten sind. Eine einkernige Verbindung weist ein MetallAtom auf, eine mehr- bzw. zweikernige Verbindung hingegen zwei Metall-Atome innerhalb einer Verbindung auf. Die Metalle können dabei direkt miteinander verbunden sein oder über ihre Substituenten verknüpft.

Eine einkernige Einkäfig-Struktur stellt under anderem die Metall-Siloxan-Silanol(-at)-Verbindun (I) dar

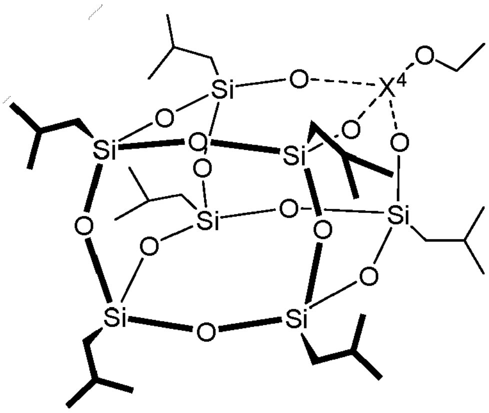

(I),

wobei

$X^4$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonderz bevorzugt Ti oder Sn ist.

Der Begriff "hydroxyfunktionelle Verbindung" oder "hydroxyfunktionalisierte Verbindung" beschreibt eine chemiesche Verbindnung welche ein oder mehrere OH-Gruppen ausweist. Der Begriff umfasst dabei hydroxyfunktionalisierte Polymere, hydroxyfunktionalisierte Oligomere und hydroxyfunktionalisierte Monomere.

Isocyanatreaktive Verbindungen sind erfindungsgemäß solche, die mit einem Isocyanat reagieren können. Diese Verbindungen können eine oder mehrere NH-, OH- oder SH-Funktionen aufweisen.

Zu den isocyanatreaktiven Verbindungen zählt insbesondere die Klasse der hydroxyfunktionelle Verbindungen. Polyole sind hydroxyfunktionelle Verbindungen, insbesondere hydroxyfunktionelle Polymere. Geeignete Polyole für die Herstellung von Polyurethanpolymeren sind insbesondere Polyetherpolyole, Polyesterpolyole und Polycarbonatpolyole sowie Mischungen dieser Polyole.

"Polymere" sind chemische Verbindungen aus Ketten- oder verzweigten Molekülen (Makromolekülen), die ihrerseits aus einer Anzahl von gleichen/gleichartigen oder auch ungleichen Einheiten, den so genannten Monomeren bestehen. Polymere umfassen dabei auch Oligomere. Oligomere sind Polymere, welche eine kleinere Anzahl von Einheiten aufweist. Sofern nicht ausdrücklich anderweitig definiert, fallen erfindungsgemäße Oligomere unter die Begrifflichkeit der Polymere. Polymere können als Homopolymere (= bestehen aus nur einer Monomereinheit), Copolymere (= bestehen aus zwei oder mehreren Monomereinheiten) oder als Polymermischung (= Polymerlegierung, Polymerblends, also Mischungen aus unterschiedlichen Polymeren und Copolymeren) vorkommen.

"Polyether" stellen eine Klasse der Polymere dar. Sie sind langkettige Verbindungen umfassend mindestens zwei gleiche oder unterschiedliche Ethergruppen. Erfindungsgemäß wird auch von Polyethern gesprochen, wenn die polymeren Ethergruppen durch andere Gruppe unterbrochen sind (z. B. durch einpolymerisierte/eingebaute Isocyanate oder weitere Polymer- oder Oligomereinheiten anderer Monomerherkunft).

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen.

Eingesetzt werden können sowohl Polyoxyalkylenpolyole, die einen niedrigen Ungesättigtheitsgrad aufweisen (gemessen nach ASTM D-2849-69:1980 und angegeben in Milliäquivalent Ungesättigtheit pro Gramm Polyol (mEq/g)), hergestellt beispielsweise mit Hilfe von so genannten Doppelmetall-Cyanidkomplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyethylenpolyole

und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30000 g/mol, sowie Polyoxyethylendiole, Polyoxyethylentriole, Polyoxypropylen-diole und Polyoxypropylentriole mit einem Molekulargewicht von 200 bis 20000 g/mol. Ebenfalls besonders geeignet sind so genannte Ethylenoxidterminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole. Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte. Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton. Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole. Darüber hinaus können Polycarbonatdiole oder Polyether-Polycarbonatdiole über eine Polymerisation von Propylenoxid mit $CO_2$ erhältlich sein.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Rizinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können. Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® CTBN von der Firma Emerald Performance Materials, LLC, USA, hergestellt werden können.

Diese ebenfalls besonders bevorzugten Polyole weisen ein mittleres Molekulargewicht von 250 bis 40000 g/mol, insbesondere von 1000 bis 30000 g/mol, und eine mittlere OH-Funktionalität im Bereich von 1,6 bis 3 auf.

Besonders geeignete Polyole sind Polyesterpolyole und Polyetherpolyole, insbesondere Polyoxyethylenpolyol,

Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Ganz besonders geeigenete Polyole sind Ethylenglykol-Dimere (CAS-Nr.: 68082-28-0) erhältlich bei der Firma Oleon unter dem Handelsnamen Radialube® 7662, Fettsäure Diol-Dimere (CAS-Nr.: 147853-32-5) erhältlich bei der Firma Oleon unter dem Handelsnamen Radianol® 1990 und/oder Naturöl-basierte Polyester-Polyole mit einer OH-Zahl von ~ 40-55 mgKOH/g erhältlich bei der Firma Oleon unter dem Handelsnamen Radia® 7294.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole im erfindungegemäßen Verfahren ein- und umgesetzt werden.

In der Ausführungsform weisen alle obigen Verfahren oder Zusammensetzungen Heptaisobutyl POSS-Titanium(IV)-Ethoxid (TiPOSS) als Katalysator in der Herstellung polymerer Verbindungen (V) auf.

In einer alternativen Ausführungsform weisen alle obigen Verfahren oder Zusammensetzungen in den Ausführungsformen anstatt Heptaisobutyl POSS-Titanium(IV)-Ethoxid (TiPOSS) in der Herstellung polymerer Verbindungen (V) auf, sondern Heptaisobutyl POSS-Zinn(IV)-Ethoxid (SnPOSS) auf oder eine Mischung aus beiden Katalysatoren.

Das erfindungsgemäße Verfahren oder die erfindungsgemäße Zusammensetzung aller obigen Kombinationen weist in einer weiter bevorzugten Ausführungsform einen weiteren Katalysator auf, ausgewählt aus der aus Metall-Siloxan-Silanol(-at)-Verbindungen, insbesondere Heptaisobutyl POSS-Titanium(IV)-Ethoxid (TiPOSS) oder Heptaisobutyl POSS-Zinn(IV)-Ethoxid (SnPOSS), Dibutylzinndilaurat (DBTL) oder Mischungen davon.

Bevorzugt kann als ein zweiter Katalysator im erfindungsgemäßen Verfahren oder in der erfindungsgemäßen Zusammensetzung Dibutylzinndilaurat (DBTL) eingesetzt werden.

In einem weiteren erfindungsgemäßen Verfahren oder in der erfindungsgemäßen Zusammensetzung kann auch nur Dibutylzinndilaurat (DBTL) als Katalysator eingesetzt werden.

In einer weiter bevorzugten Ausführungsform des Verfahrens oder der Zusammensetzung, umfasst diese/s Additive aus der Gruppe umfassend ein oder mehrere Füllstoffe ausgewählt aus der Gruppe aus anorganischen und organischen Füllstoffen, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, kalzinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln, ein oder mehrere Schäummittel aus der Gruppe umfassend Zitronensäure mit Kreide, Natriumhydrogencarbonat mit Dinatriumhyrdogencarbonat, Poly(methylhydrosiloxan), Azodicarbonsäureamid, gasgefüllte (Kunststoff)-Hohlkugeln wie z. B. Unicell® MS 140 DS, ein oder mehrere Hydrophobierungsmittel aus der Gruppe aus Carnaubawachs, Zinkstearat, Rizinusöl, Paraffin, Teflonpulver oder Naturöl-basierte Polyester, ein oder mehrere Haftvermittler aus der Gruppe der Silane, insbesondere Aminosilane wie 3-Aminopropyl-trimethoxysilan, 3-Aminopropyl-dimethoxymethylsilan, N-(2-Aminoethyl)-3-aminopropyl-trimethoxysilan, N-(2-Amino-ethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy anstelle der Methoxygruppen am Silizium, Aminosilane mit sekundären Aminogruppen, wie insbesondere N-Phenyl-, N-Cyclohexyl- und N-Alkylaminosilane, weiterhin Mercaptosilane, Epoxysilane, (Meth)acrylosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan und die entsprechenden, Silane mit Ethoxygruppen anstelle der Methoxygruppen, sowie oligomere Formen dieser Silane, ein oder mehrere Feuchtigkeitsfänger aus der Gruppe aus Silane insbesondere Tetraethoxysilan, Vinyltrimethoxy- oder Vinyltriethoxysilan oder Organoalkoxysilane, welche in $\alpha$-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe, ein oder mehrere Weichmacher aus der Gruppe aus Carbonsäureester wie Phthalate, insbesondere 1,2-Cyclohexandicarbonsäurediisononylester, Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, Citrate, insbesondere Triethylcitrat, organische Phosphor- und Sulfonsäureester, Polybutene oder von natürlichen Fetten oder Ölen abgeleitete Fettsäuremethyl- oder -ethylester., ein oder mehrere UV-Stabilisatoren aus der Gruppe aus organischen (Benzophenone, Benzotriazole, Oxalanilide, Phenyltriazine) und anorganischen (Titandioxid, Eisenoxid, Zinkoxid) UV-Absorber sowie Antioxidantien aus

der Gruppe der sterisch gehinderten Phenole, Amine und Phosphite und Phosphonite, ein oder mehrere Thixotropiermittel aus der Gruppe aus Schichtsilikaten wie Bentonite, Derivaten von Rizinusöl, hydriertes Rizinusöl, Polyamide, Polyurethane, Harnstoffverbindungen, pyrogene Kieselsäuren, Celluloseether oder hydrophob modifizierte Polyoxyethylene, ein oder mehrere Benetzungsmittel aus der Gruppe aus nichtionischen, anionischen und kationischen Tensiden oder Kombinationen davon ausgewählt sind.

In einer weiteren bevorzugten Ausführungsform beinhaltet das erfindungsgemäße Verfahren und/oder die erfindungsgemäße Zusammensetzung zusätzlich einen Wasserfänger, bevorzugt einen ein Vinylalkoxysilan, besonders bevorzugt Vinyltrimethoxysilan (VTMO).

In einer Ausführungsform des erfindungsgemäßen Verfahrens werden (vernetzte) polymere Verbindungen (V) hergestellt, indem Oxim-Silane mit Polypropylenglykol-basierten Diolen oder Triolen umgesetzt werden.

In einer alternativen Ausführungsform des erfindungsgemäßen Verfahrens werden (vernetzte) polymere Verbindungen (V) hergestellt, indem Oxim-Silane mit höherfunktionellen Polyetherpolyolen mit einer OH-Funtionalität > 3, bevorzugt > 4 umgesetzt werden.

In einer weiteren alternativen Ausführungsform des erfindungsgemäßen Verfahrens werden (vernetzte) polymere Verbindungen (V) hergestellt, indem Oxim-Silane mit Polyesterpolyolen mit einer OH-Funtionalität > 2 umgesetzt werden.

In einer weiteren alternativen Ausführungsform des erfindungsgemäßen Verfahrens werden (vernetzte) polymere Verbindungen (V) hergestellt, indem Oxim-Silane mit Naturöl-basierte Polyesterpolyolen, bevozugt Rizinusöl, Radialube® 76, Radianol® 1990, Radia® 7294, mit einer OH-Funtionalität ≥ 2 umgesetzt werden.

In einer weiteren alternativen Ausführungsform des erfindungsgemäßen Verfahrens werden (vernetzte) polymere Verbindungen (V) hergestellt, indem Oxim-Silane mit Polyethercarbonat-Polyolen mit einer OH-Funtionalität ≥ 2 umgesetzt werden.

In einer weiteren alternativen Ausführungsform des erfindungsgemäßen Verfahrens werden (vernetzte) polymere Verbindungen (V) hergestellt, indem Oxim-Silane mit Hydroxyalkyl-funktionalisiertem Polydimethylsiloxan (PDMS) mit einer OH-Funtionalität = 2 umgesetzt werden.

In einer bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R Vinyl- oder Methyl- ist und jeder $R^a$ ein Oxim-Rest der allgemeinen Formel (C) ist, wobei $R^g$ ist Ethyl- und $R^h$ ist Methyl-, mit Polypropylenglykol-basierten Diolen oder Triolen umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist Ethyl- und $R^h$ ist Methyl-, mit höherfunktionellen Polyetherpolyolen mit einer OH-Funtionalität > 3, bevorzugt > 4 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist Ethyl- und $R^h$ ist Methyl-, mit Polyesterpolyolen mit einer OH-Funtionalität > 2 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist Ethyl- und $R^h$ ist Methyl-, mit Naturöl-basierte Polyesterpolyolen, bevorzugt Rizinusöl, Radialube® 76, Radianol® 1990, Radia® 7294, mit einer OH-Funtionalität ≥ 2 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist Ethyl- und $R^h$ ist Methyl-, mit Polyethercarbonat-Polyolen mit einer OH-Funtionalität ≥ 2 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist Ethyl- und $R^h$ ist Methyl-, mit Hydroxyalkyl-funktionalisiertem PDMS mit einer OH-Funtionalität = 2 umgesetzt.

In einer weiter bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Ethyl- und jeder $R^a$ ein Oxim-Rest der allgemeinen Formel (C) ist, wobei $R^g$ und $R^h$ jeweils Methyl- sind, mit Polypropylenglykol-basierten Diolen oder Triolen umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Ethyl- und jeder $R^a$ ein Oxim-Rest der allgemeinen Formel (C) ist, wobei $R^g$ und $R^h$ jeweils Methyl- sind, mit höherfunktionellen Polyetherpolyolen mit einer OH-Funtionalität > 3, bevorzugt > 4 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Ethyl- und jeder $R^a$ ein Oxim-Rest der

allgemeinen Formel (C) ist, wobei $R^g$ und $R^h$ jeweils Methyl- sind, mit Polyesterpolyolen mit einer OH-Funtionalität > 2 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Ethyl- und jeder $R^a$ ein Oxim-Rest der allgemeinen Formel (C) ist, wobei $R^g$ und $R^h$ jeweils Methyl- sind, mit Naturöl-basierte Polyesterpolyolen, bevorzugt Rizinusöl, mit einer OH-Funtionalität ≥ 2 umgesetzt.

In einer alternativen bevorzugten Ausführungsform des erfindungsgemäßen Verfahrens wird das Oxim-Silan definiert gemäß der allgemeine Formel $Si(R)_m(R^a)_{4-m}$, in der m = 1 ist, R ist Ethyl- und jeder $R^a$ ein Oxim-Rest der allgemeinen Formel (C) ist, wobei $R^g$ und $R^h$ jeweils Methyl- sind, mit $CO_2$-Polyolen mit einer OH-Funtionalität ≥ 2 umgesetzt.

In einer alternativen bevorzugten Ausführungsform des erfindungsgemäßen Verfahrens wird das Oxim-Silan definiert gemäß der allgemeine Formel $Si(R)_m(R^a)_{4-m}$, in der m = 1 ist, R ist Ethyl- und jeder $R^a$ ein Oxim-Rest der allgemeinen Formel (C) ist, wobei $R^g$ und $R^h$ jeweils Methyl- sind, mit Hydroxyalkyl-funktionalisiertem PDMS mit einer OH-Funtionalität = 2 umgesetzt.

In einer weiter bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist n-Propyl- und $R^h$ ist Methyl-, mit Polypropylenglykol-basierten Diolen oder Triolen umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist n-Propyl- und $R^h$ ist Methyl-, mit höherfunktionellen Polyetherpolyolen mit einer OH-Funtionalität > 3, bevorzugt > 4 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist n-Propyl- und $R^h$ ist Methyl-, mit Polyesterpolyolen mit einer OH-Funtionalität > 2 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist n-Propyl- und $R^h$ ist Methyl-, mit Naturöl-basierte Polyesterpolyolen, bevorzugt Rizinusöl, Radialube® 76, Radianol® 1990, Radia® 7294, mit einer OH-Funtionalität ≥ 2 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist n-Propyl- und $R^h$ ist Methyl-, mit $CO_2$-Polyolen mit einer OH-Funtionalität ≥ 2 umgesetzt.

In einer alternativen bevorzugten Ausführungsform des erfindungsgemäßen Verfahrens wird das Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist n-Propyl- und $R^h$ ist Methyl-, mit Hydroxyalkyl-funktionalisiertem PDMS mit einer OH-Funtionalität = 2 umgesetzt.

In einer weiter bevorzugten Ausführungsform des erfindungsgemäßen Verfahrens wird eine Mischung von Oxim-Silanen mit Polypropylenglykol-basierten Diolen oder Triolen umgesetzt.

In einer alternativen bevorzugten Ausführungsform des erfindungsgemäßen Verfahrens wird eine Mischung von Oxim-Silanen mit einer OH-Funtionalität > 3, bevorzugt > 4 umgesetzt.

In einer alternativen bevorzugten Ausführungsform des erfindungsgemäßen Verfahrens wird eine Mischung von Oxim-Silanen mit Polyesterpolyolen mit einer OH-Funtionalität > 2 umgesetzt.

In einer alternativen bevorzugten Ausführungsform des erfindungsgemäßen Verfahrens wird eine Mischung von Oxim-Silanen mit einer OH-Funtionalität ≥ 2 umgesetzt.

In einer alternativen bevorzugten Ausführungsform des erfindungsgemäßen Verfahrens wird eine Mischung von Oxim-Silanen mit einer OH-Funtionalität = 2 umgesetzt.

In einer Ausführungsform des erfindungsgemäßen Verfahrens werden geschäumte polymere Verbindungen (V) hergestellt durch den ein Einsatz von ein oder mehreren Treibmitteln.

In einer bevorzugten Ausführungform des erfindungsgemäßen Verfahrens werden geschäumte polymere Verbindungen (V) hergestellt, indem ein Oxim-Silan, definiert gemäß der allgemeine Formel $Si(R)_m(R^a)_{4-m}$, in der m = 1 ist, R ist Vinyl- oder Methyl- und jeder $R^a$ ein Oxim-Rest der allgemeinen Formel (C) ist, wobei $R^g$ ist Ethyl- und $R^h$ ist Methyl-, mit einem Polypropylenglykol-basierten Diol oder Triol (EO-getippt) und unter Zugabe des Treibmittels Poly(methylhydrosiloxan oder gasgefüllten (Kunststoff)-Hohlkugeln wie z. B. Unicell® MS 140 DS umgesetzt wird.

In einer alternativen bevorzugten Ausführungform des erfindungsgemäßen Verfahrens werden geschäumte polymere Verbindungen (V) hergestellt, indem ein Oxim-Silan, definiert gemäß der allgemeine Formel $Si(R)_m(R^a)_{4-m}$, in der m = 1 ist, R ist Ethyl- und jeder $R^a$ ein Oxim-Rest der allgemeinen Formel (C) ist, wobei $R^g$ und $R^h$ jeweils Methyl-

sind, mit Polypropylenglykol-basierten Diolen oder Triolen (EO-getippt) und unter Zugabe des Treibmittels Poly(methylhydrosiloxan oder gasgefüllten (Kunststoff)-Hohlkugeln wie z. B. Unicell® MS 140 DS umgesetzt wird.

In einer besonders bevorzugten Ausführungform des erfindungsgemäßen Verfahrens werden geschäumte polymere Verbindungen (V) hergestellt, indem ein Oxim-Silan, definiert gemäß der allgemeine Formel $Si(R)_m(R^a)_{4-m}$, in der m = 1 ist, R ist Vinyl-oder Methyl- und jeder $R^a$ ein Oxim-Rest der allgemeinen Formel (C) ist, wobei $R^g$ ist Ethyl- und $R^h$ ist Methyl-, mit einem Polypropylenglykol-basierten Diol oder Triol (EO-getippt) und unter Zugabe des Treibmittels Poly(methylhydrosiloxan oder gasgefüllten (Kunststoff)-Hohlkugeln wie z. B. Unicell® MS 140 DS umgesetzt wird.

In einer alternativen besonders bevorzugten Ausführungform des erfindungsgemäßen Verfahrens werden geschäumte polymere Verbindungen (V) hergestellt, indem ein Oxim-Silan, definiert gemäß der allgemeine Formel $Si(R)_m(R^a)_{4-m}$, in der m = 1 ist, R ist Ethyl- und jeder $R^a$ ein Oxim-Rest der allgemeinen Formel (C) ist, wobei $R^g$ und $R^h$ jeweils Methyl- sind, mit Polypropylenglykol-basierten Diolen oder Triolen (EO-getippt), unter Zugabe des Treibmittels Poly(methylhydrosiloxan oder gasgefüllten (Kunststoff)-Hohlkugeln wie z. B. Unicell® MS 140 DS sowie unter Zugabe eines oder mehrere Hydrophobierungsmittel aus der Gruppe aus Carnaubawachs, Zinkstearat, Rizinusöl, Paraffin, Teflonpulver oder Naturöl-basierte Polyester umgesetzt wird.

In einer alternativen Ausführungsform des erfindungsgemäßen Verfahrens werden (kettenverlängerte) polymere Verbindungen (V) hergestellt, indem ein Acetoxy-Silan, insbesondere Triacetoxymethylsilan oder Diacetoxydimethylsilan mit einem einem Polyol, insbesondere mit einem Diol umgesetzt wird.

In einer alternativen bevorzugten Ausführungsform des erfindungsgemäßen Verfahrens werden (kettenverlängerte) polymere Verbindungen (V) hergestellt, indem ein Acetoxy-Silan, insbesondere Triacetoxymethylsilan oder Diacetoxydimethylsilan mit einem Polypropylenglykol-basierten Diol umgesetzt wird, wobei das Diol ein Molgewicht zwischen 3900 und 4300 g/mol aufweist und eine OH-Zahl zwischen 24 und 30 aufweist.

In einer alternativen bevorzugten Ausführungsform des erfindungsgemäßen Verfahrens werden (kettenverlängerte) polymere Verbindungen (V) hergestellt, indem ein Acetoxy-Silan, insbesondere Triacetoxymethylsilan oder Diacetoxydimethylsilan mit einem Polypropylenglykol-basierten Diol umgesetzt wird, wobei das Diol ein Molgewicht zwischen 7900 und 9300 g/mol aufweist und eine OH-Zahl zwischen 10 und 18 aufweist.

In einer alternativen bevorzugten Ausführungsform des erfindungsgemäßen Verfahrens werden (kettenverlängerte) polymere Verbindungen (V) hergestellt, indem ein Acetoxy-Silan, insbesondere Triacetoxymethylsilan oder Diacetoxydimethylsilan mit einem Polypropylenglykol-basierten Diol umgesetzt wird, wobei das Diol ein Molgewicht zwischen 11800 und 12500 g/mol aufweist und eine OH-Zahl zwischen 17 und 14 aufweist.

In einer alternativen bevorzugten Ausführungsform des erfindungsgemäßen Verfahrens werden (kettenverlängerte) polymere Verbindungen (V) hergestellt, indem ein Acetoxy-Silan, insbesondere Triacetoxymethylsilan oder Diacetoxydimethylsilan mit einem Polypropylenglykol-basierten Diol umgesetzt wird, wobei das Diol ein Molgewicht zwischen 17800 und 19500 g/mol aufweist und eine OH-Zahl zwischen 3 und 10 aufweist.

In einer weiter bevorzugten Ausführungsform des erfindungsgemäßen Verfahrens werden (verntezte) polymere Verbindungen (V) hergestellt, indem zunächst ein Acetoxy-Silan, insbesondere Triacetoxymethylsilan oder Diacetoxydimethylsilan mit einem einem Polyol, insbesondere mit einem Diol umgesetzt wird und das erhaltene Reaktionsprodukt anschließend mit einer weiteren Silan-Verbindung (S) der allgemeinen Formel $Si(R)_m(R^a)_{4-m}$, wie hierin definiert, bevorzugt einem Oxim-Silan oder einem Isocyanat oder Isocyanatosilan umgesetzt wird.

## Besonders bevorzugte Ausführungsformen der vorliegenden Erfindung

**1.** Verfahren zur Herstellung von polymeren Verbindungen (V) unter Ausbildung von Si-O-C-Bindungen durch Umsetzung isocyanatreaktiver Verbindungen (P), mit mindestens einer Silan-Verbindung (S) der allgemeinen Formel $Si(R)_m(R^a)_{4-m}$, **dadurch gekennzeichnet, dass**

- R unabhängig voneinander H, eine optional substituierte, geradkettige oder verzweigte C1- bis C16-Alkylgruppe, eine optional substituierte, geradkettige oder verzweigte C2- bis C16-Alkenylgruppe und/oder eine optional, substituierte C4- bis C14-Arylgruppe bedeutet und m eine ganze Zahl von 0 bis 2 ist oder eine Alkoxygruppe bedeuten kann, wenn m = 1 oder 2 ist,

- $R^a$ unabhängig voneinander ausgewählt ist aus der Gruppe bestehend aus

    - einem Hydroxycarbonsäureesterrest mit der allgemeinen Strukturformel (A):

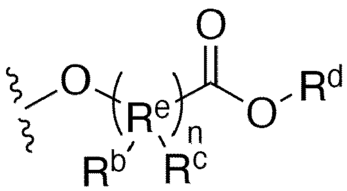

(A),

wobei

$R^b$ unabhängig voneinander H oder eine optional substituierte, geradkettige oder verzweigte C1- bis C16- Alkylgruppe oder eine optional substituierte C4- bis C14-Arylgruppe, bedeutet,

$R^c$ unabhängig voneinander H oder eine optional substituierte, geradkettige oder verzweigte C1- bis C16-Alkylgruppe oder eine optional substituierte C4- bis C14-Arylgruppe, bedeutet,

$R^d$ H oder eine optional substituierte, geradkettige oder verzweigte C1-bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,

$R^e$ ein Kohlenstoffatom oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet und

n eine ganze Zahl von 1 bis 10 ist,

- einem Hydroxycarbonsäureamidrest mit der allgemeinen Strukturformel (B):

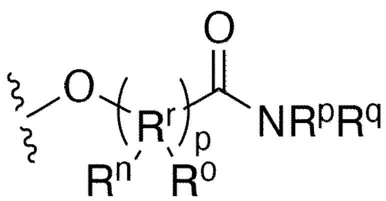

(B),

wobei

$R^n$ unabhängig voneinander H oder eine optional substituierte, geradkettige oder verzweigte C1- bis C16-Alkylgruppe oder eine optional substituierte C4- bis C14-Arylgruppe, bedeutet,

$R^o$ unabhängig voneinander H oder eine optional substituierte, geradkettige oder verzweigte C1- bis C16- Alkylgruppe oder eine optional substituierte C4- bis C14-Arylgruppe, bedeutet,

$R^p$ und $R^q$ unabhängig voneinander H oder eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,

$R^r$ ein Kohlenstoffatom oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und

p eine ganze Zahl von 1 bis 10 ist,

- einem Oximrest mit der allgemeinen Strukturformel (C):

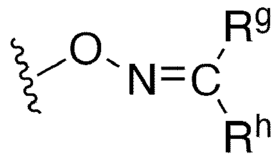

(C),

wobei
$R^g$ und $R^h$ unabhängig voneinander H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,

- einem Carbonsäureamidrest -N($R^i$)-C(O)-$R^j$,
wobei

  $R^i$ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und

  $R^j$ H eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,

- einem Carbonsäurerest -O-C(O)-$R^f$,
wobei
$R^f$ H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe bedeutet,
und/oder

- einem Aminrest -NH($R^l$),
wobei

  $R^l$ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und
  $R^j$ H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

**2.** Verfahren nach Ausführungsform 1, **dadurch gekennzeichnet, dass** die Silan-Verbindung (S) Oligomere oder Polymere sind, in welchen
$R^a$ unabhängig voneinander ausgewählt ist aus der Gruppe bestehend aus einem Hydroxycarbonsäureesterrest mit der allgemeinen Strukturformel (A'),

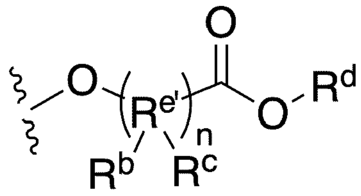

(A‘),

wobei

$R^b$ und $R^c$ nicht H bedeuten,
$R^b$ nicht H und $R^c$ nicht Methyl- bedeuten,
$R^b$ nicht Methyl- und $R^c$ nicht H bedeuten,
$R^d$ wie oben definiert ist,
n = 1 ist und
$R^e$ ein Kohlenstoffatom bedeutet.

**3.** Verfahren nach Ausführungsform 1 oder 2, **dadurch gekennzeichnet, dass** die isocyanatreaktive Verbindung (P) ein hydroxyfunktionalisiertes Polymer ist, welches ausgewählt ist aus der Gruppe bestehend aus Polyalkylenpolyole Polybutadien-Polyole, Polyisopren-Polyole, Polyole höher Funktionalität, Ethylenoxid (EO)-terminierte Polyoxypropylenpolyole, Polyetherpolyole, Polyesterpolyole, Styrol-Acrylnitril, Acryl-Methacrylat, (Poly)harnstoff gepfropfte oder enthaltende Polyetherpolyole, Polycarbonatpolyole, Polyethercarbonat-Polyole ($CO_2$-Polyole), Glycerin, Polyhydroxyfunktionelle Fette und Öle, Naturöl-basierte Polyesterpolyole, Polykohlenwasserstoffpolyole, Polytetrahydrofuran basierte Polyether (PTMEG), OH-terminierte Prepolymere auf der Basis der Reaktion eines Polyether- oder Polyesterols mit einem Diisocyanat, Polyalkylendiole, Polyesterpolyole, Hydroxyalkyl-funktionalisierte Polydimethylsoloxane oder Mischungen daraus.

**4.** Verfahren nach Ausführungsform 3, **dadurch gekennzeichnet, dass** das hydroxyfunktionalisierte Polymer ausgewählt ist aus der Gruppe bestehend aus Polypropylenglykol-basierte Di- und/oder Triolen, (höherfunktionelle) Polyetherpolyole, Polyesterpolyole, Naturöl-basierte Polyesterpolyole Polyethercarbonat-Polyole ($CO_2$-Polyole), Hydroxyalkyl-funktionalisierte Polydimethylsoloxane oder Mischungen davon.

**5.** Verfahren nach Ausführungsform 3 oder 4, **dadurch gekennzeichnet, dass** das Molgewicht des Polypropylenglykol-basierten Di- und/oder Triols im Bereich von 500 g/mol und 50000 g/mol liegt.

**6.** Verfahren nach Ausführungsform 3 oder 4, **dadurch gekennzeichnet, dass** das Molgewicht der Naturöl-basierte Polyesterpolyole im Bereich von 200 g/mol und 5000 g/mol liegt.

**7.** Verfahren nach Ausführungsform 3 oder 4, **dadurch gekennzeichnet, dass** das Molgewicht der Polyethercarbonat-Polyole ($CO_2$-Polyole) oder der Hydroxyalkyl-funktionalisierte Polydimethylsoloxane im Bereich von 500 g/mol und 5000 g/mol liegt.

**8.** Verfahren nach einer oder mehreren der Ausführungsformen 1 bis 7, **dadurch gekennzeichnet, dass** die OH-Zahl des hydroxyfunktionalisierten Polymers im Bereich von 2 mgKOH/g bis 600 mgKOH/g liegt.

**9.** Verfahren nach einer oder mehreren der Ausführungsformen 1 bis 8 **dadurch gekennzeichnet, dass** ein Katalysator eingesetzt wird.

**10.** Verfahren nach Ausführungsform 9 **dadurch gekennzeichnet, dass** der Katalysator ausgewählt ist aus der Gruppe bestehend aus Metall-Silsesquioxanen wie Heptaisobutyl POSS-Titanium(IV)-Ethoxid (TiPOSS), Heptaisobutyl POSS-Zinn(IV)-Ethoxid (SnPOSS) oder Mischungen daraus, Tetraalkyltitanaten, wie Tetramethyltitanat, Tetraethyltitanat, Tetra-n-propyltitanat, Tetra-isopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ($(R^{\#}O)_2TiO_2$, worin $R^{\#}$ für Isopropyl, n-Butyl, Isobutyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Diisobutoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminium-sec-butyat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylzinnmercaptide, Dibutylzinnmercaptide, Dioctylzinnmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodecanoat, Gemische aus Bismut- und Zinkcarboxylaten, Reaktionsprodukte von Calcium-Salzen und organischen Carbonsäuren (Carboxylate) wie Calcium-bis(2-ethylhexanoat) oder Calcium-neodecanoat, Reaktionsprodukte von Natrium-Salzen und organischen Carbonsäuren (Carboxylate) wie Natrium(2-ethylhexanoat) oder Natrium-neodecanoat, Gemische aus Calcium- und Natriumcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen oder Mischungen davon, Katalysatoren auf Basis stickstoffhaltiger Verbindungen wie Butylamin, Octylamin, Dibutylamin, Monoethanolamin, Diethanolamin, Triethanolamin, Diethylentriamin,Oleylamin, Cyclohexylamin, Benzylamin, Diethylaminopropylamin, Xylylendiamin, Triethylendiamin, Tetramethylguanidin, 2-Guanidinobenzimidazol, Acetylacetoneguanidin, 1,3-Di-o-tolylguanidin, 2-tert.Butyl-1,1,3,3-tetramethylguanidin, Diphenylguanidin, 2,4,6,-Tris)dimethylaminomethyl)phenol, Morpholin, N-Methylmorpholin, 2-Ethyl-4-Methylimidazol und 1,8-Diazabicylo(5.4.0)undecen-7 (DBU), 1,5-Diazabicyclo[4.3.0]non-5-en (DBN), 6-Dibutylamino-1,8-diazabicyclo[5.4.0]undec-7-en, Salze dieser Verbindungen mit Carbonsäuren oder anderen Säuren oder Mischungen davon.

**11.** Verfahren nach einer oder mehreren der Ausführungsformen 1 bis 10, **dadurch gekennzeichnet, dass** ein oder mehrere Additive eingesetzt werden, wobei die Additive ausgewählt werden aus der Gruppe umfassend ein oder mehrere Füllstoffe ausgewählt aus der Gruppe aus anorganischen und organischen Füllstoffen.

**12.** Verfahren nach einer oder mehreren der Ausführungsformen 1 bis 11, **dadurch gekennzeichnet, dass**

R unabhängig voneinander ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl-, Phenyl-, Methoxy- oder Ethoxy-;

$R^a$ für ein Carbonsäurerest -O-C(O)-$R_f$ steht,
in welchem das Sauerstoffatom der Hydroxygruppe an das Siliciumatom gebunden ist und
Rf unabhängig voneinander ausgewählt ist aus der Gruppe bestehend aus Methyl-, Ethyl-, n-Propyl, Isopropyl-, n-Butyl-, Isobutyl-, 2-Ethylhexyl-, Vinyl- oder Phenyl- und
m eine ganze Zahl von 0 bis 2 ist.

**13.** Verfahren nach einer oder mehreren der Ausführungsformen 1 bis 12, wobei in der Kettenverlängerung isocyanatreaktiver Verbindungen (P), (S) im Unterschuss zu (P) vorliegt, bezogen ist auf eingesetzten Mengen in Mol.

**14.** Verfahren nach Ausführungsform 13, wobei der Unterschuss ein Verhältnis der Silan-Verbindung (S) zur isocyanatreaktiven Verbindung (P) von mindestens 1 : 1,1 darstellt, bezogen auf eingesetzten Mengen in Mol.

**15.** Verfahren nach einer oder mehreren der Ausführungsformen 1 bis 11, **dadurch gekennzeichnet, dass**

R unabhängig voneinander ausgewählt ist aus der Gruppe bestehend aus Vinyl-, Methyl-, Ethyl-, n-Propyl, Isopropyl-, n-Butyl-, Isobutyl-, sec-Butyl, tert-Butyl, Isobutyl-, 2-Ethylhexyl-oder Phenyl- und

$R^a$ unabhängig voneinander ausgewählt ist aus einem Oximrest der allgemeinen Struktur (C), wobei

$R^g$ und $R^h$ unabhängig voneinander ausgewählt sind aus der Gruppe bestehend aus Vinyl-, Methyl-, Ethyl-, n-Propyl, Isopropyl-, n-Butyl-, Isobutyl-, sec-Butyl, tert-Butyl, Isobutyl-, 2-Ethylhexyl-oder Phenyl-, wobei m = 0 oder 1 ist.

**16.** Verfahren nach einer oder mehreren der Ausführungsformen 1 bis 11 oder 15, wobei in der Vernetzung isocyanatreaktiver Verbindungen (P), (S) und (P) zu gleichen Teilen 1 : 1 oder (S) im Überschuss zu (P) vorliegt, bezogen ist auf eingesetzten Mengen in Mol.

**17.** Verfahren nach Ausführungsform 16, wobei der Überschuss ein Verhältnis der Silan-Verbindung (S) zur isocyanatreaktiven Verbindung (P) von mindestens 1,1 : 1 darstellt, bezogen auf eingesetzten Mengen in Mol.

**18.** Verfahren gemäß einer oder mehreren der Ausführungsformen 1 bis 17, dadurch gekennzeichnet, dass

(i) in einem ersten Schritt eine isocyanatreaktive Verbindung (P) gemäß einer der Ausführungsformen 3 bis 8 sowie eine Silan-Verbindung (S) der allgemeinen Formel $Si(R)_m(R^a)_{4-m}$ gemäß einer der Ausführungsformen 12 bis 14 und optional mindestens ein Katalysator gemäß Ausführungsform 10 bereitgestellt wird,
(ii) in einem zweiten Schritt die Komponenten aus Schritt (i) unter Einsatz mechanischer und/oder thermischer Energie zusammengebracht und vermischt und aufgearbeitet werden,
(iii) in einem dritten Schritt eine Silan-Verbindung (S) der allgemeinen Formel $Si(R)_m(R_a)_{4-m}$ gemäß einer der Ausführungsformen 15 bis 17 zugesetzt wird sowie optional mindestens ein Katalysator gemäß Ausführungsform 10 sowie optional mindestens ein Additiv gemäß Ausführungsform 11 der Mischung aus Schritt (i) oder (ii) zugegeben wird,
(iv) in einem vierten Schritt die Komponenten aus dem Schritt (iii) unter Einsatz mechanischer und/oder thermischer Energie vermischt werden.

**19.** Verfahren gemäß einer oder mehreren der Ausführungsformen 1 bis 17, dadurch gekennzeichnet, dass

(i) in einem ersten Schritt eine isocyanatreaktive Verbindung (P) gemäß einer der Ausführungsformen 3 bis 8 sowie einer Silan-Verbindung (S) der allgemeinen Formel $Si(R)_m(R^a)_{4-m}$ gemäß einer der Ausführungsformen 15 bis 17 bereitgestellt wird,
(ii) in einem zweiten Schritt optional mindestens ein Katalysator gemäß Ausführungsform 8 und/oder mindestens eines Additives gemäß Ausführungsform 11 der Komponenten aus Schritt (i) zugesetzt wird, und
(iii) in einem dritten Schritt die Komponenten aus (i) und (ii) unter Einsatz mechanischer und/oder thermischer Energie zusammengebracht und vermischt werden.

**20.** Verfahren gemäß Ausführungsform 18 oder 19, **dadurch gekennzeichnet, dass** ein Treibmittel zugesetzt wird, das ausgewählt ist aus der Gruppe bestehend aus Wasser, Luft, Stickstoff, Kohlenstoffdioxid, Pentan, Cyclopentan, Fluorkohlenwasserstoffe oder Mischungen davon.

**21.** Polymere Verbindung erhältlich durch ein Verfahren gemäß einer der Ausführungsformen 1 bis 14, 18 oder 20.

**22.** Polymere Verbindung erhältlich durch ein Verfahren gemäß einer der Ausführungsformen 1 bis 11, 15 bis 17 oder 19 bis 20.

**23.** Verwendung polymerer Verbindungen gemäß einer der Ausführungsformen 21 oder 22 in der Herstellung oder Bereitstellung eines Zwei-Komponenten (2K) Systems.

**24.** Verwendung polymerer Verbindungen gemäß einer der Ausführungsformen 21 oder 22 für die Herstellung von Weichschäumen.

**25.** Verwendung polymerer Verbindungen gemäß Ausführungsform 24, wobei der Weichschaum eine Shore A-Härte nach ASTM D2240-15 im Bereich von 0-100 aufweist.

**26.** Verwendung polymerer Verbindungen gemäß Ausführungsform 24 oder 25, wobei der Weichschaum eine Zugfestigkeit nach DIN EN ISO 1798:2008-04 zwischen 180 und 400 kPa aufweist.

**27.** Verwendung polymerer Verbindungen gemäß einer der Ausführungsformen 21 oder 22 für die Herstellung von ungeschäumten Polymer-Werkstoffen.

**28.** Verwendung polymerer Verbindungen gemäß Ausführungsformen 27, wobei der ungeschäumte Polymer-Werkstoff eine Dichte im Bereich nach DIN EN ISO 845:2009-10 von 800 bis 1950 kg/$m^3$ aufweist.

**29.** Verwendung polymerer Verbindungen gemäß Ausführungsform 27 oder 28, wobei der ungeschäumte Polymer-Werkstoff eine Shore A-Härte nach ASTM D2240-15 im Bereich von 0-100 aufweist.

**30.** Verwendung polymerer Verbindungen nach einer der Ausführungsformen 21 oder 22, zur Herstellung von Weichschäumen zum Einsatz in CASE-Anwendungen (Beschichtungen, Klebstoffe, Dichtungen und Elastomere)

und/oder elastomeren Materialien.

**31.** Verwendung polymerer Verbindungen nach einer der Ausführungsformen 21 oder 22, zur Herstellung von Weichschäumen in Möbeln, Matratzen, Autositzen, Dichtungs- oder Akustikmaterialien.

**32.** Zusammensetzung enthaltend polymere Verbindungen gemäß Ausführungsform 21.

**33.** Zusammensetzung enthaltend polymere Verbindungen gemäß Ausführungsform 22.

## Beispiele

### Teil A: Isocyanatfreie Vernetzung von hydroxyfunktionalisierten Polymeren (P) mit Silan-Verbindungen (S)

Es konnte in Versuchen überraschenderweise festgestellt werden, dass die Reaktion von Polyolen mit Silan-Verbindungen (S), die als Vernetzer in der RTV-1 - Silikonchemie eingesetzt werden, in Abhängigkeit vom molaren Verhältnis und der chemischen Natur der verwendeten Reaktionspartner zu ausgehärteten und stabilen Produkten führt. Hieraus ergibt sich als wesentlicher Vorteil, dass auf die für die Vernetzung von Polyolen üblicherweise verwendeten und toxikologisch bedenklichen Isocyanate verzichtet werden kann.

Die Herstellung von geschäumten und ungeschäumten Polyurethanen basiert auf der Umsetzung von Isocyanaten mit Isocyanat-reaktiven Verbindungen, wie beispielsweise Polyolen. Problematisch ist hierbei grundsätzlich, dass die Isocyanatkomponente als Risikostoff angesehen wird. Diese Bewertung manifestiert sich darin, dass Stoffe, die mehr als 1% freies, monomeres Isocyanat enthalten, mit "krebserzeugend Kategorie 3; H351" gekennzeichnet werden müssen. Es ist deshalb von besonderem industriellen Interesse, auch im Hinblick auf die immer weiter in den Vordergrund rückende Arbeitssicherheit und die damit verbundene Beachtung der Arbeitshygiene, Produkte anzubieten, die einerseits polyurethanähnliche Materialeigenschaften besitzen, anderseits aber auf die grundsätzlich gefährdenden Materialeigenschaften von Isocyanaten verzichten.

### Teil A1: Herstellung ungeschäumter Elastomere durch Reaktion von Silan-Verbindungen mit Polyolen

Die nachfolgenden Vergleichsbeispiele (Tabelle 9 und Tabelle 10) zeigen die Ergebnisse der Umsetzung verschiedener **Silan-Verbindungen (S)** mit **hydroxyfunktionalisierten Polymeren (Polyolen, P).**

Als reaktive Silan-Verbindungen wurden kommerziell verfügbare Vernetzer auf Basis von Trioximsilan oder Triacetoxysilan verwendet, die für die Herstellung von RTV-1 Silikonsystemen eingesetzt werden.

**Tabelle 1: Verwendete Silan-Verbindungen (S)**

| | | |
|---|---|---|
| $S_A$ | Vinox | Butan-2-on-O, O’, O"-(vinylsilylidyn)trioxim, MW = 314 g/mol, F=3 |
| $S_B$ | Wasox | Butan-2-on-O, O’, O"-(methylsilylidyn)trioxim, MW = 301 g/mol, F=3 |
| $S_C$ | LM 100 (Nitrochemie) | Propan-2-on-O, (dimethoxyvinylsilylidiyn)oxim, Propan-2-on-O, O’-(methoxyvinylsilylidiyn)dioxim, Propan-2-on-O, O’, O"-(vinylsilylidiyn)trioxim (Mischung), F=3 |
| $S_D$ | LM 400 (Nitrochemie) | Propan-2-on-O, O’, O"-(ethylsilylidyn)trioxim, MW = 273 g/mol, F=3 |
| $S_E$ | OS 2600 | Pentan-2-on-O, O’, O"-(vinylsilylidyn)trioxim, MW = 356 g/mol, F=3 |
| $S_F$ | OS 1600 | Pentan-2-on-O, O’, O"-(methylsilylidyn)trioxim, MW = 343 g/mol, F=3 |
| $S_G$ | Sigma-Aldrich | Triacetoxy(vinyl)silan, MW= 232 g/mol, F=3 |

Als hydroxyfunktionalisierte Polymere wurden, die in der nachfolgenden Tabelle 2 angegebenen Polyole verwendet, die sich hinsichtlich ihres chemischen Aufbaus in verschiedene Gruppen unterteilen lassen:

**Tabelle 2: Übersicht der verwendeten Polol-Typen**

| |
|---|
| Polypropylenglykol-basierte Di- und Triole |
| Höherfunktionelle Polyetherpolyole |
| Polyester-Polyole |

(fortgesetzt)

| |
|---|
| Naturöl-basierte Polyester-Polyole |
| Polyethercarbonat-Polyole ($CO_2$-Polyole) |
| Hydroxyalkyl-funktionalisiertes Polydimethylsiloxan |

**Tabelle 3: PPG-basierte Di- und Triole**

| Polypropylenglykol-basierte Di- und Triole | Funktionalität F = 2 bis 3 |
|---|---|
| PolyU L 4000 | PPG-Diol, MW ~4000 g/mol, OH-Zahl ~ 28 mgKOH/g |
| PolyU L 8000 | PPG-Diol, MW ~ 8000 g/mol, OH-Zahl ~14 mgKOH/g |
| PolyU L 12000 | PPG-Diol, MW ~ 12000 g/mol, OH-Zahl ~ 10 mgKOH/g |
| PolyU L 18000 | PPG-Diol, MW ~ 18000 g/mol, OH-Zahl ~ 6 mgKOH/g |
| PolyU-Pol D2002 | PPG-Diol, MW ~ 2000 g/mol, OH-Zahl ~ 56 mgKOH/g |
| PolyU-Pol DE4020 | PPG-Diol, EO-getippt, MW ~4000 g/mol, OH-Zahl ~ 28 mgKOH/g |
| PolyU-Pol G500 | PPG-Triol, MW ~450 g/mol, OH-Zahl ~ 300 mgKOH/g |
| PolyU-Pol G1000 | PPG-Triol, MW ~1000 g/mol, OH-Zahl ~ 160 mgKOH/g |
| PolyU-Pol FS3615 | PPG-Triol, EO-getippt, MW ~3600 g/mol, SAN-Copolymer (15%), OH-Zahl ~ 40 mgKOH/g |
| PolyU-Pol M5020 | PPG-Triol, EO-getippt, MW ~4800 g/mol, OH-Zahl ~ 35 mgKOH/g |
| PolyU-Pol M5215 | PPG-Triol, SAN-Copolymer (15 %), OH-Zahl ~ 31 mgKOH/g |
| PolyU-Pol M5225 | PPG-Triol, SAN-Copolymer (25 %), OH-Zahl ~ 27 mgKOH/g |
| PolyU-Pol M5240 | PPG-Triol, SAN-Copolymer (40 %), OH-Zahl ~ 21 mgKOH/g |

**Tabelle 4: Höherfunktionelle Polyetherpolyole**

| Höherfunktionelle Polyetherpolyole | Funktionalität F > 4 |
|---|---|
| PolyU-Pol MH2012 | Hochfunktionelles Polyetherpolyol, SAN-Copolymer (~12 %), OH-Zahl ~ 28 mgKOH/g |
| PolyU-Pol RF2000 | Sorbitol gestartetes Polyetherpolyol, MW ~ 2000 g/mol; F~4,5, OH-Zahl ~ 165 mgKOH/g |
| PolyU-Pol RF551 | Sorbitol gestartetes Polyetherpolyol, MW ~ 600 g/mol, F~4,5, OH-Zahl ~ 420 mgKOH/g |

**Tabelle 5: Polyesterpolyole**

| Polyesterpolyole | |
|---|---|
| Desmophen® 2450 X | OH-Zahl 213 mgKOH/g, F >2 |
| Desmophen® 2200 B | OH-Zahl 60 mgKOH/g, F >2 |

**Tabelle 6: Naturöl-basierte Polyester-Polyole**

| Naturöl-basierte Polyester-Polyole | |
|---|---|
| Rizinusöl | OH-Zahl ~ 160 mgKOH/g, F ~2,7 |

(fortgesetzt)

| Naturöl-basierte Polyester-Polyole | |
|---|---|
| Radialube 7662 | MW ~ 1180 g/mol, OH-Zahl ~ 100 mgKOH/g, F ~2,1 |
| Radianol 1990 | MW ~ 540 g/mol, OH-Zahl ~ 209 mgKOH/g, F ~2,0 |
| Radia 7294 | MW ~ 2500 g/mol, OH-Zahl ~ 48 mgKOH/g, F ~2,1 |

**Tabelle 7: Polyethercarbonat-Polyole**

| Polyethercarbonat-Polyole ($CO_2$-Polyole) | |
|---|---|
| Cardyon® LC 07, (Covestro) | MW ~1000 g/mol, OH-Zahl ~ 112 mgKOH/g, F~2 |
| Converge® CPX-2520-56, (Aramco) | MW ~2000 g/mol, OH-Zahl ~ 56 mgKOH/g, F~2 |
| Converge® 351-30, (Aramco) | MW ~2600 g/mol, OH-Zahl ~ 66 mgKOH/g, F~3 |

**Tabelle 8: Hdroxyalkyl-funktionalsiertes Polydimethylsiloxan OH-Alk-PDMS**

| Hydroxyalkyl-funktionalisiertes Polydimethylsiloxan | |
|---|---|
| Korasilon Öl OH 50 | MW ~ 2250 g/mol; OH-Zahl ~ 50 mgKOH/g, F=2 |

Der Aushärte- bzw. Reaktionsprozess der Umsetzung der oben genannten Silan-Verbindungen **(Tabelle 1)** mit den OH-Gruppen der Polyole **(Tabelle 3 bis Tabelle 8)** unter Abspaltung der an den Silan-Verbindungen befindlichen Abgangsgruppen (Oxim, Acetat) wurde untersucht.

**Allgemeine Prozedur der Umsetzung der reaktiven Silankomponente mit den Polyolen**

In einem 100 ml Einwegbecher wurden jeweils 10 g der **Polyol-Komponente P** und die entsprechende Menge der Silan-Verbindung **S** (Tabelle 9; Vinox und Wasox, Tabelle 10; LM 100, LM 400, OS1600, OS 2600, Triacetoxy(vinyl)silan), die sich aus dem in der Zeile **MV** der nachfolgenden Tabelle 9 angegebenen Mischungsverhältnis ergibt, abgewogen und mit einem Propellerrührer für 15 s bei 1500 U/min gemischt. Ca. 10 g der Mischung wurden in eine Reaktionsschale überführt und unter den in der Tabelle angegeben Temperaturbedingungen zum Aushärten belassen. Als optimales Mischungsverhältnis für die Aushärteversuche wurde empirisch ein molares Verhältnis von ca. 1:1,5 bis 1:3,0 (P zu S) gefunden.

**Tabelle 9: Untersuchung der Vernetzung unterschiedlicher Polyole mit einem Vinyl-substituierten (Vinox) und einem Methyl-substituierten (Wasox) Trioximsilan**

| Bezeich-nung | Polyol -Typ | Polyolbez. | OH – Funkt. | Silan-Verbindung S | Mischungs-verhältnis MV; P:S [Gew.%] | Reaktions-bedingungen | Polymereigenschaften | Stabilität bei 23°C/50% r. Lf.** |
|---|---|---|---|---|---|---|---|---|
| **EP 1 / $S_A$** | Polypropylenglykol-basierte Diole und Triole | PolyU L 4000 | 2 | Vinox | 10:1,2 | RT: keine Reaktion 80 °C: ca. 6h | 12 Shore A* | o |
| **EP 1 / $S_B$** | | | | Wasox | | Keine Reaktion bei RT bzw. 100 °C Bei 140 °C: 4h | | + |
| **EP 2 / $S_A$** | | PolyU L 8000 | 2 | Vinox | 10:0,6 | s. **EP 1 A** | Weicher als EP 1 A; Härte nicht messbar. | – |
| **EP 2 / $S_B$** | | | | Wasox | | Keine Reaktion | / | / |
| **EP 3 / $S_A$** | | PolyU L 12000 | 2 | Vinox | 10:0,4 | s. **EP 1 A** | Weicher als EP 2 A; Härte nicht messbar | – |
| **EP 3 / $S_B$** | | | | Wasox | | Keine Reaktion | / | / |
| **EP 4 / $S_A$** | | PolyU L 18000 | 2 | Vinox | 10:0,3 | s. **EP 1 A** | Weicher als EP 3 A; Härte nicht messbar | – |
| **EP 4 / $S_B$** | | | | Wasox | | Keine Reaktion | / | / |
| **EP 5 / $S_A$** | | PolyU-Pol D2002 | 2 | Vinox | 10:2,4 | s. **EP 1 A** | 35 Shore A | – |
| **EP 5 / $S_B$** | | | | Wasox | | RT, 100 °C: Keine Reaktion 140 °C: 4h | | + |
| **EP 6 / $S_A$** | | PolyU-Pol DE4020 (EO-getippt) | 2 | Vinox | 10:1,2 | RT: 16 h 80 °C: 1h | 20 Shore A | – – |
| **EP 6 / $S_B$** | | | | Wasox | | 80 °C: 6h | | o |
| **EP 7 / $S_A$** | | PolyU-Pol G500 | 3 | Vinox | 10:8,4 | RT: 5h | 60 Shore A Spröde, leichter Schrumpf | o |
| **EP 7 / $S_B$** | | | | Wasox | | 80 °C: 3h | | + + |
| **EP 8 / $S_A$** | | PolyU-Pol G1000 | 3 | Vinox | 10:4,2 | RT: 5h | 55 Shore A; Spröde, leichter Schrumpf, | o |
| **EP 8 / $S_B$** | | | | Wasox | | 80 °C: 3h | | + + |

| | | | | | | | | |
|---|---|---|---|---|---|---|---|---|
| **EP 9 / $S_A$** | | PolyU-Pol M5020 (EO-getippt) | 3 | Vinox | | RT: 1h | 26 Shore A | – |
| **EP 9 / $S_B$** | | PolyU-Pol M5020 (EO-getippt) | | Wasox | | 80 °C: 2h | | |
| **EP 10 / $S_A$** | | PolyU-Pol MS5215 (EO-getippt, SAN) | 3 | Vinox | 10:0,9 | RT: 1h | 43 Shore A | – |
| **EP 10 / $S_B$** | | | | Wasox | | 80 °C: 1,5h | | o |
| **EP 11 / $S_A$** | | PolyU-Pol MS5225 (EO-getippt, SAN) | 3 | Vinox | | RT: 50 min | 51 Shore A | – |
| **EP 11 / $S_B$** | | | | Wasox | | 80 °C: 1,5h | | + |
| **EP 12 / $S_A$** | | PolyU-Pol MS5240 (EO-getippt, SAN) | 3 | Vinox | | RT: 45 min | 61 Shore A | – |
| **EP 12 / $S_B$** | | | | Wasox | | 80 °C: 1h | | + + |
| **EP 13 / $S_A$** | | PolyU-Pol FS3615 (SAN) | 3 | Vinox | 10:1,3 | RT: 16h | 32 Shore A | – |
| **EP 13 / $S_B$** | | | | Wasox | | 80 °C: 5h | | + + |
| **EP 14 / $S_A$** | **Höherfunktionelle Polyetherpolyole** | PolyU-Pol MH2012 | 6 | Vinox | 10:0,4 | RT: 3h | 23 Shore A | – – |
| **EP 14 / $S_B$** | | | | Wasox | | 80 °C: 2,5h | | o |
| **EP 15 / $S_A$** | | PolyU-Pol RF2000 | 4,5 | Vinox | 10: 2,3 | RT: 16h | 28 Shore A; Relativ weich, aber spröde | – |
| **EP 15 / $S_B$** | | | | Wasox | | 80 °C: 5h | | + + |
| **EP 16 / $S_A$** | | PolyU-Pol RF551 | 4,5 | Vinox | 10:7,8 | RT: 45 min | 45 Shore A; Spröde, leichter Schrumpf | o |
| **EP 16 / $S_B$** | | | | Wasox | | 80°C: 30 min | | + + |
| **EP 17 / $S_A$** | **Polyester-Polyole** | Desmophen ® 2450 X | >2 | Vinox | 10:7,7 | RT: 6h | 46 Shore A | + + |
| **EP 17 / $S_B$** | | | | Wasox | | 100 °C: 1h | | |
| **EP 18 / $S_A$** | | Desmophen ® 2200 B | >2 | Vinox | 10:2,5 | RT: 7h | 50 Shore A; Spröde, Schrumpf | + + |
| **EP 18 / $S_B$** | | | | Wasox | | 80 °C: 1h | | |
| **EP 19 / $S_A$** | **Naturöl-basierte Polyester-Polyole** | Rizinusöl | 2,7 | Vinox | 10:4,3 | RT: 16h | 40 Shore A; Spröde, Schrumpf | + + |
| **EP 19 / $S_B$** | | | | Wasox | | 80° C: 5h | | |
| **EP 20 / $S_A$** | | Radialube® 7662 | 2,1 | Vinox | 10:4,0 | RT 16 h | 40 Shore A; Spröde | + + |
| **EP 20 / $S_B$** | | | | Wasox | | 100°C: 5h | | |
| **EP 21 / $S_A$** | | Radianol® 1990 | 2 | Vinox | 10:8,7 | / | 55 Shore A; Spröde | / |
| **EP 21 / $S_B$** | | | | Wasox | | 100°C: 1h Hautbildung; nach 6h unter Haut noch flüssig | | + + |
| **EP 22 / $S_A$** | | Radia® 7294 | 2,1 | Vinox | 10:1,9 | / | 29 Shore A; Spröde, weich | / |
| **EP 22 / $S_B$** | | | | Wasox | | 100°C: 1h | | + |

| | | | | | | | | |
|---|---|---|---|---|---|---|---|---|
| **EP 23 / $S_A$** | $CO_2$-Polyole | Cardyon® LC07 | 2 | Vinox | 10:4,7 | RT: 16h | 55 Shore A; Spröde | + |
| **EP 23 / $S_B$** | | | | Wasox | | 100 °C: 6h | | + + |
| **EP 24 / $S_A$** | | Converge® CPX-2520-56 | 2 | Vinox | 10:2,4 | RT: 24h | 45 Shore A | + |
| **EP 24 / $S_B$** | | | | Wasox | | 100°C: 8h | | + + |
| **EP 25 / $S_A$** | | Converge® Polyol 351-30 | 3 | Vinox | 10:1,6 | RT: 6h | 41 Shore A | + |
| **EP 25 / $S_B$** | | | | Wasox | | 100 °C: 30 min | | + + |
| **EP 26 / $S_A$** | Hydroxyalkyl-funktionali-siertes PDMS | Korasilon® Öl OH 50 | 2 | Vinox | 10:4,3 | RT: 12h | 31 Shore A | + + |
| **EP 26 / $S_B$** | | | | Wasox | | 100 °C: 3h | | |

*Härte Shore A: ASTM D2240:15

** Stabilitätsabstufung: — — : 1 bis 3 Tage, — : 3 bis 7 Tage, **O** : 1 bis 4 Wochen, **+** : 4 bis 8 Wochen, **+ +** : > 8 Wochen

**Fazit der Vernetzungsversuche zur Bildung von ausgehärteten Elastomer-Produkten (EP), Reaktion der Polyole mit Silan-Verbindungen $S_A$ und $S_B$**

Die Beurteilung der verschiedenen Elastomer-Produkte **EP 1 - EP 26,** die unter den in der Tabelle 9 angegebenen Reaktionsbedingungen (Temperatur, Zeit und Silantyp **$S_A$** bzw. **$S_B$)** erhalten wurden, lässt nachfolgende Schlüsse zu:

- Alle untersuchten Polyoltypen **(Tabelle 9, Spalte 2)** lassen sich mit einer geeigneten Silan-Verbindung **($S_A$** und/oder **$S_B$)** zu Elastomer-Produkten **(EP)** überführen.
- Die Reaktionsgeschwindigkeit zur Bildung von **EPs** hängt maßgeblich vom Substitutionsmuster (Vinyl vs. Methyl) des Silan-Verbindungen **S** ab. Der vinylsubstituierte Silan-Verbindung **$S_A$** reagiert deutlich schneller unter erheblich milderen Temperaturbedingungen als der methylsubstituierte Silan-Verbindung **$S_B$.** Umgekehrt nimmt die Stabilität der erhaltenen Verbindungen, die mit dem methylsubstituierten Silan-Verbindung **$S_B$** erhalten wurden, deutlich zu (s. Beispiele **EP 1, EP 8, EP 12** und **EP 15).**
- Die Stabilität und Reaktivität wird im Allgemeinen auch durch die Funktionalität und im speziellen Maße durch das Molekulargewicht der verwendeten Polyole beeinflusst. Es konnte festgestellt werden, dass Polyole mit geringem Molekulargewicht und gleichzeitig hoher Funktionalität (Beispiel **EP 15** und **EP 16)** mit hoher Reaktionsgeschwindigkeit, auch bei Raumtemperatur, zu stabilen Produkten reagieren.
- EO-getippte Polyole (z. B. PolyU-Pol DE4020, PolyU-Pol M5020) reagieren grundsätzlich bereitwilliger mit den Silan-Verbindungen **(S),** als nicht EO-getippte Polyole (z. B. PolyU L 4000, PolyU-Pol G1000); allerdings sind die erhaltenen Elastomerprodukte **(EP)** deutlich instabiler (Beispiel **EP 1** zu **EP 6).** Überraschenderweise hat sich gezeigt, dass sich die Stabilität der EO-getippten Polyole durch Zusatz von Styrol-Acrylnitril-Copolymer (SAN-Polyole) sukzessive erhöhen lässt. Bei einem SAN-Gehalt von 40 Gew% bezogen auf die Menge des EO-getippten Polyols (z. B. PolyU-Pol MS5240, **EP 12)** werden stabile Elastomerprodukte, bei ansonsten gleichen Reaktionsbedingungen, erhalten.
- Polyole mit besonders hoher Hydrophobie (Naturöl-basierte Polyole, Rizinusöl, Hydroxyalkyl-funktionalisiertes PDMS) führen nach Reaktion mit den Silan-Verbindungen **S** zu besonders stabilen Elastomerprodukten (Beispiele **EP 19, EP 20** und **EP 26)**
- Auch die neuartigen Polyethercarbonatpolyole, die durch den Einbau von $CO_2$ in die Polymerkette erhalten werden ($CO_2$-Polyole), lassen sich durch die Silan-Verbindung **S** in Analogie zu den Beispielen **EP 19, EP 20** und **EP 26** zu besonders stabilen Elastomer-Produkten umsetzen **(EP 23, EP 24** und **EP 25).**

Auf Basis der genannten Beobachtungen wurden auch andere Silane **($S_C$** bis **$S_G$)** auf ihre Eignung als Vernetzer für die Bildung von Elastomer-Produkten untersucht. Die Ergebnisse befinden sich in nachfolgender Tabelle 10.

## Tabelle 10: Untersuchung der Vernetzung ausgewählter Polyole mit unterschiedlichen Silan-Verbindungen

| **Bezeich-nung** | **Polyol-Typ** | **Polyol bez.** | **OH-Funkt.** | **Silan-Verbind. (S)** | **Mischungsver-hältnis MV; P:S [Gew.%]** | **Reaktionsbedingungen** | **Polymereigenschaften** | **Stabilität bei 23°C/50 % r. Lf.**** |
|---|---|---|---|---|---|---|---|---|
| **EP 12 / $S_A$** | **PPG-basiertes Triol** | PolyU-Pol MS5240 (EO-getippt, SAN) | 3 | Vinox | 10:0,9 | RT: 45 min | 61 Shore A* | – |
| **EP 12 / $S_B$** | | | | Wasox | | 80 °C: 1h | | + + |
| **EP 12 / $S_C$** | | | | LM 100 | 10:0,8 | RT: 1,5h | Keine vollständige Reaktion; Oberfläche klebrig | + + |
| **EP 12 / $S_D$** | | | | LM 400 | | 80 °C: 2h | | |
| **EP 12 / $S_E$** | | | | OS 2600 | 10:1,1 | RT: 1h<br>80 °C: 1,5h | 61 Shore A | – |
| **EP 12 / $S_F$** | | | | OS 1600 | | | | + + |
| **EP 12/ $S_G$** | | | | Acetoxy-Vernetzer | 10:0,7 | RT: < 2min | schnelle Zersetzung | – – |
| **EP 16 / $S_A$** | **Höherfunktionelles Polyetherpolyol** | PolyU-Pol RF551 | 4,5 | Vinox | 10:7,8 | RT: 45 min | 45 Shore A; Spröde, leichter Schrumpf | **o** |
| **EP 16 / $S_B$** | | | | Wasox | | 80°C: 30 min | | + + |
| **EP 16 / $S_C$** | | | | LM 100 | 10:6,8 | RT: 2h | 55 Shore A; Spröde, **Kein Schrumpf** | **o** |
| **EP 16 / $S_D$** | | | | LM 400 | | 80 °C: 1h | | + + |
| **EP 16 / $S_E$** | | | | OS 2600 | 10:8,9 | RT: 1,5h | 45 Shore A; Spröde, leichter | **o** |

| | | | | | | | | |
|---|---|---|---|---|---|---|---|---|
| **EP 16 / $S_F$** | | | | OS 1600 | | 80 °C: 50 min | Schrumpf | + + |
| **EP 16 / $S_G$** | | | | Acetoxy-Vernetzer | 10:5,8 | instantan | Spröde, schnelle Zersetzung | – – |
| **EP 19 / $S_A$** | **Naturöl-basiertes Polyester-Polyol** | Rizinusöl | 2,7 | Vinox | 10:4,3 | RT: 16h | 40 Shore A; Spröde, Schrumpf | + + |
| **EP 19 / $S_B$** | | | | Wasox | | 80° C: 5h | | |
| **EP 19 / $S_C$** | | | | LM 100 | 10:3,8 | RT: 16 h | 22 Shore A; Weich, **Kein Schrumpf** | + + |
| **EP 19 / $S_D$** | | | | LM 400 | | 80 °C: 7h | | |
| **EP 19 / $S_E$** | | | | OS 2600 | 10:4,9 | RT: 16 h | 40 Shore A; Spröde, Schrumpf | + + |
| **EP 19 / $S_F$** | | Rizinusöl | 2,7 | OS 1600 | 10:4,9 | 80 °C: 6h | 40 Shore A; Spröde, Schrumpf | + + |
| **EP 19 / $S_G$** | | | | Acetoxy-Vernetzer | 10:3,2 | RT: < 2min | schnelle Zersetzung | – – |
| **EP 23 / $S_A$** | **$CO_2$-Polyol** | Cardyon® LC 07 | 2 | Vinox | 10:4,7 | RT: 16h | 55 Shore A; Spröde | + |
| **EP 23 / $S_B$** | | | | Wasox | | 80 °C: 3h | | + + |
| **EP 23 / $S_C$** | | | | LM 100 | 10:4,1 | RT: 16h | 38 Shore A; **Nicht spröde** | + |
| **EP 23 / $S_D$** | | | | LM 400 | | 80 °C: 5h | | + + |
| **EP 23 / $S_E$** | | | | OS 2600 | 10:5,3 | RT: 16h | 55 Shore A; Spröde | + |
| **EP 23 / $S_F$** | | | | OS 1600 | | 80 °C: 4h | | + + |
| **EP 23 / $S_G$** | | | | Acetoxy-Vernetzer | 10:3,5 | RT: 45 min | 55 Shore A | – – |

*Härte Shore A: ASTM D2240:15

** Stabilitätsabstufung: **– –** : 1 bis 3 Tage, **–** : 3 bis 7 Tage, **O** : 1 bis 4 Wochen, **+** : 4 bis 8 Wochen, **+ +** : > 8 Wochen; Stabilitätskriterien keine Änderung der Shore A-Härte bei Lagerung 23°C / r. Lf. 50%

**Fazit für die Beurteilung der Eignung von verschiedenen Silan-Verbindungen für den Elastomer-Bildungsprozess**

Die Beurteilung des Einflusses der verschiedenen Silan-Verbindungen (**$S_A$** bis **$S_G$**) auf den Elastomer-Bildungsprozess wurde anhand ausgewählter Polyole (PolyU-Pol MS5240, PolyU-Pol RF551, Rizinusöl und Cardyon® LC07) überprüft. Die Elastomer-Produkte **EP 12, EP 16, EP 19** und **EP** 23, die unter den in der Tabelle 10 angegebenen Reaktionsbedingungen (Temperatur, Zeit und Silantyp **$S_A$** bis **$S_G$**) erhalten wurden, lassen nachfolgende Schlüsse zu:

- Der Silan-Typ beeinflusst die Bildungsgeschwindigkeit der Elastomer-Produkte. Es lässt sich folgende Reaktivitätsabstufung ableiten:

  Vinyl-substituiertes Silan: **$S_G$ > $S_A$ > $S_C$ > $S_E$**
  Alkyl-substituiertes Silan: **$S_B$ > $S_D$ > $S_F$**

- Die Reaktion von Acetoxyvinylsilan **$S_G$** mit unterschiedlichen Polyolen führt zu einer schnellen Bildung der entsprechenden Elastomerprodukte, allerdings sind diese extrem instabil.
- Die Elastomer-Produkte aus der Reaktion von **$S_C$** und **$S_D$** mit Polyolen haben keine Schrumpftendenz (Beispiel **EP 16** und **EP 19)** und sind geruchsneutral.
- Die erhaltenen Ergebnisse lassen sich auf alle Polyole, die in Tabelle 9 aufgeführt sind, übertragen.

Wie im Fazit für Tabelle 9 beschrieben, lässt sich die Stabilität der Elastomer-Produkte durch die Verwendung von hydrophoben Naturöl-basierten Polyolen erheblich erhöhen. Daraus folgt, dass die Verwendung von hydrophoben

Additiven ebenfalls zu einer Stabilitätserhöhung der gebildeten Elastomer-Produkte führen sollte. Der Grund für dieses Verhalten liegt in den gebildeten Si-O-C-Bindungen, die im Gegensatz zu den aus der Silikon-Chemie bekannten Si-O-Si Bindungen, in Anwesenheit von Luftfeuchte instabil sind. Durch Hinzugabe eines hydrophoben Additivs kann das Eindringen von Wasser reduziert bzw. verhindert werden. Daraus resultieren Produkte erhöhter Stabilität. In der folgenden Tabelle 11 befindet sich eine Übersicht der verwendeten Hydrophobierungsmittel.

**Tabelle 11: Übersicht der verwendeten Hydrophobierungsmittel**

| | |
|---|---|
| Carnaubawachs | Kahl Wax 2442; Kahl Wax |
| Zinkstearat | Hydrophobierungsmittel NBL; Baerlocher |
| Paraffin | Paraffinum perliquidum; OPW Ingredients |
| Teflonpulver | Ceraflour 965; BYK |
| Rizinusöl | First Special Grade, OPW Ingredients |
| Korasilon® Öl OH 50 | Obermeier |
| Korasilon® ÖIR 0,5 | |
| Radialube® 7662 | Oleon |
| Radianol® 1990 | |
| Radia® 7294 | |
| Tego® Phobe 6010 | Evonik |

In der folgenden Tabelle 12 sind hierzu unterschiedliche Elastomer-Produkte (EP **27** bis **EP 36)** auf Basis der Umsetzung von PolyU-Pol M5020 und der Silan-Verbindung $\mathbf{S_B}$ (Wasox), **EP 9,** mit den genannten Hydrophobierungsmitteln aufgeführt. Da die Stabilität des **EP 9** / $\mathbf{S_B}$ gegenüber dem auf Grundlage von PolyU-Pol MS5240 gebildeten Elastomeren **EP 12** / $\mathbf{S_B}$ reduziert ist, konnte eine signifikantere Beobachtung über die Veränderung im Stabilitätsverhalten gemacht werden. Reaktionsbedingungen für alle Umsetzungen: 60 min bei 100°C, molares Verhältnis 1:1,5 (P : S).

**Tabelle 12: Untersuchung der Stabilität von auf Basis von PolyU-Pol M5020 und $S_B$ gebildeten Elastomer-Produkten unter Verwendung von hydrophobierenden Additiven/hydrophoben Polyolen**

| | | Zeitraum; Härten gemessen in Shore A* | | | | | | | Stabilität bei 23°C/ 50% r. Lf.** |
|---|---|---|---|---|---|---|---|---|---|
| **Bezeichnung** | **Additiv[Gew%]** | **Start** | **Woche 1** | **Woche 2** | **Woche 3** | **Woche 4** | **Woche 5** | **Woche 7** | **/** |
| **EP 9 / $S_B$** | (Ohne Zusatz) | 26 | 15 | 10 | nicht messbar | nicht messbar | nicht messbar | nicht messbar | **-** |
| **EP 27 / $S_B$** | Carnaubawachs; 5%*** | 35 | 35 | 28 | 22 | 19 | 14 | 12 | **O** |
| **EP 28 / $S_B$** | Paraffin; 10% | 26 | 22 | 18 | 16 | 14 | 13 | 10 | -; Migration |
| **EP 29 / $S_B$** | Teflonpulver; 10% | 27 | 22 | 20 | 15 | 14 | 12 | 11 | **-** |
| **EP 30 / $S_B$** | Rizinusöl; 10% | 31 | 23 | 20 | 15 | 14 | 11 | 11 | **-** |
| **EP 31 / $S_B$** | Korasilon® Öl OH 50; 10% | 31 | 29 | 28 | 22 | 18 | 16 | 15 | ○ |
| **EP 32 / $S_B$** | Korasilon® Öl R 0,5; 10% | 30 | 26 | 23 | 17 | 14 | 12 | 11 | **-** |
| **EP 33 / $S_B$** | Radialube® 7662; 10% | 30 | 24 | 18 | 9 | nicht messbar | nicht messbar | nicht messbar | **-** |
| **EP 34 / $S_B$** | Radianol® 1990; 10% | 37 | 40 | 41 | 38 | 36 | 36 | 35 | **+ +** |
| **EP 35 / $S_B$** | Radia® 7294; 10% | 26 | 22 | 16 | 8 | nicht messbar | nicht messbar | nicht messbar | **-** |
| **EP 36 / $S_B$** | Tego® Phobe 6010; 5% | 28 | 24 | 19 | 11 | 8 | 7 | 6 | **-** |

*Härte Shore A: ASTM D2240:15
** Stabilitätsabstufung: - - : 1 bis 3 Tage, - : 3 bis 7 Tage, ○ : 1 bis 4 Wochen, + : 4 bis 8 Wochen, + + : > 8 Wochen
*** Verarbeitungsgründe limitieren die maximale Menge auf 5%

**Ergebnisse der Hydrophobierung des Elastomer-Produktes EP** 9

Die Beurteilung der verschiedenen Elastomer-Produkte EP 27 - EP 36 lässt folgende Schlüsse zu:

- Alle untersuchten Hydrophobierungsmittel führen prinzipiell zu einem Stabilitätsgewinn, der sich durch einen langsameren Härteabfall bemerkbar macht (im Vergleich zu **EP 9 / $S_B$**).
- Der Zusatz von Radianol® 1990 ist besonderes effektiv, es werden langzeitstabile Elastomer-Produkte erhalten.

**Teil A2: Herstellung geschäumter Elastomere durch Reaktion von Silan-Verbindungen mit Polyolen**

Die in **Teil** A1 beschriebenen Versuche zur Darstellung von ungeschäumten Elastomeren durch Reaktion von Silan-Verbindungen S mit Polyolen, führte zu der Überlegung, dieses Reaktionsprinzip auch für die Herstellung von geschäumten Produkten (Schaum-Produkte SP) zu nutzen. Allerdings besteht in diesem Fall die Problematik, dass Isocyanat als wichtiger Baustein fehlt. Die Herstellung entsprechender geschäumter Polyurethan-Produkte basiert auf der chemischen Reaktion von Isocyanat mit Wasser und der daraus resultierenden Bildung von $CO_2$, welches als eigentliches chemisches Treibmittel fungiert. Es musste deshalb die Eignung alternativer, sowohl chemischer als auch physikalischer Schäumverfahren für die Herstellung von geschäumten Elastomeren ausgelotet werden.

Als chemische Treibmittel wurden Verbindungen getestet, die durch Reaktion von ein oder zwei Verbindungen $CO_2$, $N_2$ oder $H_2$ abspalten, um dadurch ein Aufschäumen des sich im Aushärteprozess befindlichen Elastomers zu gewährleisten. Hierzu wurden die Reaktionen von Zitronensäure mit Kreide, Natriumhydrogencarbonat mit Dinatriumhydrogenphosphat (chemische $CO_2$-Bildung), Poly(methylhydrosiloxan) mit Protonenspendern (chemische $H_2$-Bildung) und die thermische Zersetzung von Azodicarbonsäurediamid (chemische $N_2$-Bildung) durchgeführt. Des Weiteren wurde untersucht, inwieweit gasgefüllte Kunststoffhohlkugeln (Ø ~10-20 µm), die unter Wärmeeinwirkung stark expandieren (bis zu 40-fache Volumenzunahme), als physikalische Treibmittel für die Bildung von quasi-geschäumten Produkten genutzt werden können.

**Tabelle 13: Übersicht der verwendeten Treibmittel**

| | | |
|---|---|---|
| Zitronensäure mit Kreide | $CO_2$ | Alfa Aesar |
| Natriumhydrogencarbonat mit Dinatriumhydrogenphosphat | $CO_2$ | Alfa Aesar |
| Poly(methylhydrosiloxan), MW ~ 1900 g/mol | $H_2$ | Alfa Aesar |
| Tracel® DBN 120 | $N_2$ | Tramaco |
| Unicell® MS 140 DS | Physikalische Expansion | Tramaco |

In Anlehnung an die unter **Teil A1** durchgeführten Untersuchungen und der daraus folgenden Ergebnisse, wurde für die Ermittlung geeigneter Reaktionen zur Bildung der elastomeren Schaum-Produkte **SP** das Polyol PolyU-Pol MS5240 verwendet, da dieses ein besonders vorteilhaftes Verhältnis zwischen Reaktivität und Stabilität aufweist. In der folgenden Tabelle 14 sind die Ergebnisse der Umsetzungen von PolyU-Pol MS5240 mit den in Tabelle 13 genannten Treibmitteln aufgeführt.

**Tabelle 14: Schaum-Reaktionen (A - E) von PolyU-Pol MS5240 mit unterschiedlichen Treibmitteln**

| Bezeichnung | Polyolbez. | Silan-Verbind. S | Mischungsverhältnis MV; P:S | Treibmittel | Reaktion |
|---|---|---|---|---|---|
| **SP A** | PolyU-Pol MS5240 (EOgetippt, SAN) | Wasox | 10:0,9 | Zitronensäure + Kreide | kein stabiles geschäumtes Elastomerpro dukt |
| **SP B** | | | | $NaHCO_3$ $+Na_2HPO_4$ | kein stabiles geschäumtes Elastomerpro dukt |
| **SP C** | | | | Poly (methylhydros iloxan) | **stabiles geschäumtes Elastomerpr odukt** |
| **SP D** | | | | Tracel® DBN 120 | kein stabiles geschäumtes Elastomerpro dukt |
| **SP E** | | | | Unicell® MS 140 DS | **stabiles geschäumtes Elastomerpr odukt** |

Es hat sich gezeigt, dass sowohl die Verwendung von Poly(methylhydrosiloxan) **(SP C;** chemisches Aufschäumen) als auch die Verwendung von Unicell® MS 140 DS **(SP E;** physikalisches Aufschäumen) zu geschäumten Produkten führt. Für die Bildung stabiler Schaumprodukte ist ein ausgewogenes Verhältnis zwischen der Vernetzungsreaktion und der Treibreaktion notwendig. Dies konnte nur für die Schaum-Reaktionen **SP C** bzw. **SP E** beobachtet werden. Im Fall der Reaktionen mit Zitronensäure und Kreide **(SP A),** Natriumhydrogencarbonat und Dinatriumhydrogenphosphat **(SP B)** und Azodicarbonsäurediamid (Tracell® DBN 120, **SP E)** wurden keine stabilen geschäumten Elastomer-Produkte erhalten.
Auf Basis der Ergebnisse aus Tabelle 14, sowie der in **Teil A1** erhaltenen Schlüsse, wurden unterschiedliche Polyole unter den oben aufgeführten Bedingungen **(SP C** bzw. **SP E)** umgesetzt. Die Ergebnisse dieser Versuche befinden sich in den folgenden Tabellen 15 und 16.

**Allgemeine Prozedur der Umsetzung der reaktiven Silankomponente mit den Polyolen**

Das Polyol wurde zunächst **vor** der eigentlichen Aufschäum-Reaktion mit 1% eines Stabilisators (Tegostab® B 8863z) versetzt (Komponente A). Anschließend wurden in einem 100 ml Einwegbecher 20 g der Komponente A, die entsprechende Menge des Silan-Verbindung **S** (die sich aus dem in den Zeilen **MV** der nachfolgenden Tabellen 15 und 16 angegebenen Mischungsverhältnissen ergibt) und die Menge an Treibmittel (5% bzw. 10%) abgewogen und mit einem Propellerrührer für 15 s bei 2500 U/min gemischt. Ca. 15 g der Mischung wurden in einen weiteren 100 ml Einwegbecher überführt und bei den in Tabelle 15 und 16 angegebenen Reaktionsbedingungen (Temperatur, Zeit) zur Reaktion gebracht.

**Tabelle 15: Darstellung von Schaum-Produkten SP C unter Variation des Polyols, der Silan-Verbindung S, der Siloxan-Menge und der Reaktionsbedingungen.**

| Bezeichnung | Polyolbez. | Siloxan-Menge [Gew%] | Silan-Verbindung S | Mischungsverhältnis MV; P:S [Gew%] | Reaktions-bedingungen | Polymereigenschaften | Stabilität bei 23°C/50% r. Lf.** |
|---|---|---|---|---|---|---|---|
| **SP 1C / $S_B$** | PolyU-Pol M5020 (EOgetippt) | 10 | Wasox | 10:0,9 | 100 °C; 60 min | Härte und Raumgewicht nicht messbar Feinzelligkeit***: -- | -- |
| **SP 2C / $S_B$** | PolyU-Pol MS5215 (EOgetippt, SAN) | | | | | 19 Shore A* 0,55 g/cm³ Feinzelligkeit: o | - |
| **SP 3C / $S_B$** | PolyU-Pol MS5225 (EOgetippt, SAN) | | | | | 22 Shore A* 0,55 g/cm³ Feinzelligkeit: + | ○ |
| **SP 4C / $S_B$** | PolyU-Pol MS5240 (EOgetippt, SAN) | | | | | 27 Shore A* 0,55 g/cm³ Feinzelligkeit: + + | + |
| **SP 5C / $S_B$** | PolyU-Pol MS5240 (EOgetippt, SAN) | 5 | Wasox | 10:0,9 | | 28 Shore A* 0,66 g/cm³ Feinzelligkeit: + + | + |
| **SP 6C / $S_D$** | | 10 | LM 400 | 10:0,8 | | 31 Shore A* 0,73 g/cm³ Feinzelligkeit: + + | |
| **SP 7C / $S_B$** | | | Wasox | 10:0,9 | 110 °C; 60 min | 21 Shore A 0,40 g/cm³ Feinzelligkeit: + + | |
| **SP 8C / $S_D$** | | | LM 400 | 10:0,8 | 120 °C; 60 min | 21 Shore A 0,38 g/cm³ Feinzelligkeit: + + | |

*Härte Shore A: ASTM D2240:15
** Stabilitätsabstufung: **- -** : 1 bis 3 Tage, - : 3 bis 7 Tage, ○ : 1 bis 4 Wochen, **+** : 4 bis 8 Wochen, **+ +** : > 8 Wochen
*** Feinzelligkeitsabstufung: - -: sehr grobzellig, -: grobzellig, o: grob- bis feinzellig, +: feinzellig, + +: sehr feinzellig

**Tabelle 16: Darstellung von Schaum-Produkten SP E unter Variation des Polvols und des Silan-Verbindung S.**

| Bezeichnung | Polyolbez. | Unicell® MS 140 DS [Gew%] | Silan-Verbindungs | Mischungsverhältnis MV; P:S [Gew%] | Reaktions-bedingungen | Polymereigenschaften*** | Stabilität bei 23°C/50% r. Lf. ** |
|---|---|---|---|---|---|---|---|
| **SP 1E / $S_B$** | PolyU-Pol M5020 (EOgetippt) | 5 | Wasox | 10:0,9 | 100 °C; 60 min | 22 Shore A* 0,54 $g/cm^3$ | - - |
| **SP 2E / $S_B$** | PolyU-Pol MS5215 (EOgetippt, SAN) | | | | | 28 Shore A* 0,54 $g/cm^3$ | |
| **SP 3E / $S_B$** | PolyU-Pol MS5225 (EOgetippt, SAN) | | | | | 38 Shore A* 0,51 $g/cm^3$ | - |
| **SP 4E / $S_B$** | PolyU-Pol MS5240 (EOgetippt, SAN) | | | | | 45 Shore A* 0,41 $g/cm^3$ | ○ |
| **SP 5E / $S_D$** | PolyU-Pol MS5240 (EOgetippt, SAN) | | LM 400 | 10:1,1 | | 40 Shore A* 0,40 $g/cm^3$ | ○ |

*Härte Shore A: ASTM D2240:15
** Stabilitätsabstufung: - - : 1 bis 3 Tage, - : 3 bis 7 Tage, ○ : 1 bis 4 Wochen, **+** : 4 bis 8 Wochen, **+ +** : > 8 Wochen
*** Die Feinzelligkeit der Schäume ist abhängig von dem Durchmesser der Kunststoffhohlkugeln.

Aus den in den Tabellen 15 und 16 aufgeführten Ergebnissen lassen sich folgende Schlüsse ziehen:

- Sowohl chemische als auch physikalische Schäumverfahren sind prinzipiell für die Herstellung von geschäumten Produkten geeignet.
- Die erhaltenen Dichten und Härten sind weitestgehend vergleichbar, es werden für beide Schäumprozesse Dichten im Bereich von 0,4 - 0,6 g/cm$^3$ und Shore A-Härten von 20 - 40 erhalten.
- Die Porengröße (Zellgröße) hängt im starken Maße von der verwendeten Schäum-Methode ab. Die physikalische Schäumung führt prinzipiell zu feinzelligen Schäumen, während bei der chemischen Schäumung erst mit zunehmendem Feststoffgehalt (SAN) feinzelligere Schäume gebildet werden.
- Ein steigender SAN-Anteil (s. a. Tabelle 9) bewirkt eine zunehmende Stabilität der Produkte (markierter Bereich der Tabelle 15 und 16).
  hohe Stabilität **SP 4C (E) > SP 3C (E) > SP 2C (E) > SP 1C (E)** niedrige Stabilität
- Die Dichte, der aus dem chemischen Treibprozess erhaltenen Schäume, ist durch die verwendete Menge des eingesetzten Poly(methylhydrosiloxan) **(SP 4C** zu **SP 5C)** sowie durch Temperatur **(SP 4C** zu **SP 7C)** steuerbar. Größere Mengen des Treibmittels und/oder eine höhere Temperatur führen zu geringeren Dichten.

Um die Langzeitstabilität der Schaum-Produkte **SP C** und **SP E** zu erhöhen, wurden analog zu den Elastomer-Produkten **(EP, Teil A1)** Versuche mit hydrophobierenden Additiven bzw. hydrophoben Polyolen durchgeführt (Tabelle 17). Hierzu wurden der Silan-Verbindung **S** (Wasox) und die Reaktionsbedingungen (100 °C, 60 min) konstant gehalten.

**Tabelle 17: Einfluss der hydrophobierenden Additive/hydrophoben Polyole auf die Langzeitstabilität der Schaum-Produkte SP C (chemisches Treibmittel, Poly (methylhydrosiloxan)) und SP E (physikalisches Treibmittel, Unicell® MS 140 DS).**

| Bezeichnun g | Polyolbez. | Treibmittel | Additiv/Polyol | Mischungsverhältnis MV; P: S [Gew%] | Polymereigenschafte n | Stabilität bei 23°C/50% r. Lf.** |
|---|---|---|---|---|---|---|
| **SP 4C / $S_B$** | PolyU-Pol MS5240 (EOgetippt, SAN) (100%) | Siloxan | Ohne Zusatz | 10:0,9 | 27 Shore A* 0,55 g/$cm^3$ | + |
| **SP 9C / $S_B$** | | | 10% Paraffin | | 28 Shore A 0,55 g/$cm^3$ | + + |
| **SP 10C / SB** | | | 10% Teflonpulver | | 35 Shore A 0,55 g/$cm^3$ | |
| **SP 11C / $S_B$** | PolyU-Pol MS5240 (EOgetippt, SAN) (90%) | | 10% Rizinusöl | 10:1,2 | 22 Shore A 0,54 g/$cm^3$ | |
| **SP 12C / $S_B$** | PolyU-Pol MS5240 (EOgetippt, SAN) (90%) | | 10% Radianol® 1990 | 10:1,7 | Grobzelliger Schaum | / |
| **SP 13C / $S_B$** | PolyU-Pol MS5240 (EOgetippt, SAN) (90%) | | 10% Radia® 7294 | 10:1,0 | 33 Shore A 0,60 g/$cm^3$ | + + |
| **SP 14C / $S_B$** | PolyU-Pol MS5240 (EOgetippt, SAN) (50%) | | 50% Radia® 7294 | 10:1,4 | 18 Shore A 0,51 g/$cm^3$ | + + |
| **SP 2E / SB** | PolyU-Pol MS5215 (EOgetippt, SAN) (100%) | Unicell®MS 140 DS | Ohne Zusatz | 10:0,9 | 28 Shore A* 0,54 g/$cm^3$ | - |
| **SP 6E / SB** | | | 10% Paraffin | | 35 Shore A* 0,54 g/$cm^3$ | + |
| **SP 7E / $S_B$** | PolyU-Pol | | 10% Rizinusöl | 10:1,2 | 38 Shore A* 0,54 g/$cm^3$ | + + |
| **SP 8E / $S_B$** | MS5215 (EOgetippt, SAN) (90%) | | 10% Korasilon® Öl OH 50 | 10:1,2 | 25 Shore A* 0,54 g/$cm^3$ | |
| **SP 9E / $S_B$** | | | 10% Korasilon® Öl R 0,5 | 10:0,9 | 25 Shore A* 0,54 g/$cm^3$ | |

*Härte Shore A: ASTM D2240:15

** Stabilitätsabstufung: - - : 1 bis 3 Tage, - : 3 bis 7 Tage, **O** : 1 bis 4 Wochen, **+** : 4 bis 8 Wochen, **+ +** : > 8 Wochen

**Ergebnisse der Hydrophobierung der Schaum-Produkte SP 4C - SP 14C (chemische Schäumung) sowie SP 2E - SP 9E (physikalische Schäumung)**

Die Beurteilung der verschiedenen geschäumten Elastomer-Produkte **SP 4C** - **SP 14C** und **SP 2E** - **SP 9E** lässt folgende Schlüsse zu:

- Alle untersuchten Hydrophobierungsmittel führen prinzipiell zu einem Stabilitätsgewinn (Vergleich **SP 4C** zu **SP 14C** und **SP 2E** zu **SP 9E**).
- Der Zusatz von Radia® 7294 und Korasilon® Öl OH 50 ist besonders effektiv; die erhaltenen geschäumten Elastomer-Produkte sind langzeitstabil.

**Teil A3: Vergleich der ungeschäumten Elastomer-Produkte (EP) und geschäumten Elastomer-Produkte (SP) mit Referenzmaterialien auf Basis von Polyurethan**

Im Anschluss an die durchgeführten Untersuchungen hinsichtlich der Darstellung unterschiedlicher geschäumter **(SP)** und ungeschäumter **(EP)** Elastomer-Produkte sollten diese auf ihre Eigenschaften bezüglich Härte, Dichte, Zugfestigkeit und Bruchdehnung untersucht und mit den analogen Isocyanat-basierten Produkten verglichen werden. Als Polyol diente hierbei das PolyU-Pol MS5240. Für die Isocyanat-freie Vernetzung wurde der Silan-Verbindung $\mathbf{S_B}$ (Wasox) und für die Isocyanat-haltige Vernetzung wurde polymeres Diphenylmethandiisocyanat (PMDI, Desmodur 44V20 L) verwendet. Zusätzlich wurde für die geschäumten Isocyanat-freien Materialien Poly(methylhydrosiloxan) (PDMHS, MW=1900 g/mol, Alfa Aesar) hinzugegeben.

**Tabelle 18: Vergleich ausgewählter technischer Daten der Isocyanat-freien und Isocyanat-haltigen ungeschäumten Materialien**

| | PolyU-Pol MS5240 / Wasox Mischungsverhältnis 1:1,5 (P:S; s. a. **EP 12 /** $\mathbf{S_B}$) Wassergehalt = 0 % | PolyU-Pol MS5240 / PMDI (Index = 100) Wassergehalt = 0 % |
|---|---|---|
| **Härte* [Shore A]** | 67 | 71 |
| **Dichte [g/cm$^3$]** | 1,0 | 1,0 |
| **Zugfestigkeit [kPa]**** | 910 | 2100 |
| **Bruchdehnung [%]**** | 50 | 50 |
| *Härte Shore A: ASTM D2240:15<br>**Zugfestigkeit und Bruchdehnung: DIN 53504:2017-3 | | |

Aus dem Vergleich der techn. Eigenschaften der ungeschäumten Elastomer-Produkte wird deutlich, dass bei gleichem Härte- und Bruchdehnungsniveau, das Isocyanat-vernetzte Produkt eine höhere Festigkeit aufweist.

**Tabelle 19: Vergleich ausgewählter technischer Daten der Isocyanat-freien und Isocyanat-haltigen geschäumten Materialien**

| | PolyU-Pol MS5240 / Wasox Mischungsverhältnis 1:1,5 (P:S s. a. **SP 4C**) Poly-(methylhydro)siloxan = 10% | PolyU-Pol MS5240 / PMDI (Index = 100) Wassergehalt = 0,7% |
|---|---|---|
| **Härte* [Shore A]** | 40 | 73 |
| **Dichte** [g/cm$^3$]** | 0,7 | 0,7 |
| **Zugfestigkeit [kPa]***** | 440 | 2200 |
| **Bruchdehnung[%]***** | 70 | 50 |
| *Härte Shore A: ASTM D2240:15<br>**ISO 845<br>***Zugfestigkeit und Bruchdehnung: DIN ISO 1798 | | |

Bei den isocyantfrei geschäumten Produkten findet man im Vergleich bei gleicher Dichte, dass Produkte geringer

Härte und größerer Dehnung erhalten werden, bei geringeren Festigkeitswerten.

## Teil B: Polymerkettenverlängerung

Ein Verfahren zur Kettenverlängerung auf Basis der Reaktion von Polyetherpolyolen und Polymeren mit Silan-Verbindungen, dadurch gekennzeichnet, dass der Molekulargewichtsaufbau an kommerziell erhältlichen Polyol-Rohstoffen durchgeführt wird. Die so erhaltenen Polyole höheren Molekulargewichts werden in Rezepturen für die Herstellung von Beschichtungen, Klebstoffen, Dichtungen und Elastomeren (CASE) verwendet.

Es konnte überraschenderweise festgestellt werden, dass handelsübliche Polyetherpolyole durch Reaktion mit Oximsilanen und Acetoxysilanen bei einem bestimmten molaren Verhältnis zu langkettigen Polymeren umgesetzt werden können. Hieraus ergibt sich als wesentlicher Vorteil eine einfache Synthesemöglichkeit von Polyolen mit höherem Molekulargewicht und vergleichsweise geringeren Viskositäten, als diese über OH-Prepolymere zugänglich sind. Nachfolgende Tabelle bildet die durchgeführten Polymerkettenverlängerungen exemplarisch auf Basis der Umsetzung von Diolen unterschiedlichen Molekulargewichts mit einem Trispentanonoximosilan ab.

### Synthese von verlängertem Polyol auf Basis von PolyU L 4000 mit Trispentanonoximosilan

In einem 500 mL Dreihalskolben werden 250 g des PolyU L 4000 vorgelegt und auf 85 °C erwärmt. Bei dieser Temperatur wird das Polyol zunächst von Restwasser weitestgehend befreit (ca. 1,5h) und anschließend unter Stickstoffatmosphäre mit 9,74 g Trispentanonoximosilan zur Reaktion gebracht. Nach beendeter Zugabe wird die Reaktion zunächst bei 85 °C für 4 h gerührt. Anschließend wird die Temperatur sukzessive auf 130 °C erhöht und das gebildete Pentanonoxim wird destillativ im Vollvakuum entfernt. Die Reaktion wird beendet, wenn kein Sieden des Kolbens mehr beobachtet wird.

### NMR-Auswertung der Reaktion von 2,2 PolyU L 4000 und OS 1600 (Pentanonoxim-basierte Silan-Verbindung

Ansatz: Mittels vier unterschiedlicher Mischungen **(M1-M4)** sollen signifikante Signale im $^{1}$H-NMR und im $^{13}$C-NMR den jeweiligen Reaktionspartnern **(M1** = Polyol 4000, **M2** = physikalische Mischung von Pentanonoxium und OS 1600, **M3** = Reaktionsprodukt aus Polyol 4000 und OS 1600 ohne destillative Aufarbeitung, **M4** = Reaktionsprodukt aus Polyol 4000 und OS 1600 nach destillativer Aufarbeitung), dem Kondensationsprodukt (Pentanonoxim) und dem Reaktionsprodukt (Silanverlängertes 4000) zugeordnet werden.

**Tabelle 20: NMR-Auswertung der Reaktion von PolyU L 4000 und OS 1600**

| | M1 | M2 | M3 | M4 |
|---|---|---|---|---|
| **Edukte** | Polyol 4000 | Pentanonoxim + OS 1600 | 2,2 Polyol 4000 + OS 1600 | 2,2 Polyol 4000 + OS 1600 |
| **Reaktionsbedingungen** | - | - | 4h, 80 °C | 1. 4h, 80 °C 2. Destillation |
| **Produkte** | Polyol 4000 | Pentanonoxim + OS 1600 | Pentanonoxim + Verlängertes Polyol 4000 | Verlängertes Polyol 4000 |
| **$^{1}$H NMR-relevante Protonen** | O***H*** (Alkohol) | O***H*** (Oxim) + C$\boldsymbol{H_3}$ (Silan-Verbindung) | O*H* (Oxim) + C$\boldsymbol{H_3}$ (eingebautes Silan) | C$\boldsymbol{H_3}$ (eingebautes Silan) |
| **Chemische Verschiebung [ppm]** | **3,83*** | **10,2** bzw **10,1**** + **0,46*** | **10,2** bzw **10,1**** + **0,22*** | **0,22*** |
| **$^{13}$C NMR-relevante Kohlenstoffatome** | ***C***-OH (Alkohol) | **C=N-** (Oxim) + ***C***$H_3$ (Silan-Verbindung) | ***C*=N-** (Oxim) + ***C***$H_3$ (eingebautes Silan) | *C*-O-Si (verlängertes Produkt) + ***C***$H_3$ (eingebautes Silan) |
| **Chemische Verschiebung [ppm]** | **67,0*** | **154,9** bzw. **154,5**** **+ -7,4*** | **155,4** bzw. **155,0**** **+ -6,1*** | **67,9* + -6,1*** |
| * Gemessen in $CDCl_3$<br>** Gemessen in DMSO-$d_6$ | | | | |

**Fazit:**

Es konnte festgestellt werden, dass bei der Reaktion von PolyU L 4000 mit OS 1600 unter den in **M3** angegebenen Bedingungen ein verlängertes Polymer gebildet wird. Sowohl die Anwesenheit von Pentanonoxim (10,2 bzw. 10,1 ppm), welches ausschließlich aus der Reaktion gebildet werden kann, als auch die Verschiebung der Methylprotonen der verwendeten Silan-Verbindung 0,22 ppm (vorher 0,46 ppm) bestätigen eine erfolgreich durchgeführte Kettenverlängerung mittels OS 1600. Dieser Sachverhalt wird weiterhin durch das Wasserstoffatom der Hydroxyfunktion des Polyols (3,83 ppm) untermauert. Das Integral dieses Signals halbiert sich nach der Reaktion, wohingegen alle weiteren Signale, die zum Polyol gehören, konstant bleiben.

Als weiteren Beweis für eine erfolgreiche Umsetzung können die $^{13}C$ NMR Spektren herangeführt werden. Sowohl die Anwesenheit von Pentanonoxim (ca. 155 ppm), als auch die Tieffeld-Verschiebung des Methyl-Kohlenstoffatoms der Silizium-Komponente (-7,4 $\rightarrow$ -6,1) führt zu diesem Schluss. Das Signal des Kohlenstoffatoms der ehemaligen Hydroxygruppe (67 ppm) wird ebenfalls nach der Reaktion in deutlich verminderter Intensität (bei gleicher Konzentration) wahrgenommen. Darüber hinaus wird ein leicht verschobenes Signal bei 67,9 ppm detektiert, welches dem Kohlenstoffatom in der entstandenen Silyl-Ether-Einheit zugeschrieben wird.

Abschließend konnte festgestellt werden, dass eine anschließende Destillation **(M4;** unter vermindertem Druck und bei erhöhter Temperatur) die Menge an Pentanonoxim in der Reaktionsmischung deutlich reduziert (s. z. Bsp. Reduktion der Oxim-Protonen-Signale). Allerdings war es nicht möglich jegliches, entstandenes Pentanonoxim aus der Reaktionsmischung zu entfernen. Das ist von entscheidender Bedeutung, da die Folgereaktionen mit isocyanathaltigen Molekülen (pMDI und Trialkoxyisocyanatosilan) von Pentanonoxim dahingehend beeinflusst wird, dass die Reaktion zwischen Pentanonoxim und isocyanathaltiger Verbindungen bevorzugt abläuft und so die Eigenschaften der gebildeten Materialien maßgeblich (negativ) beeinflusst. Um dies zu verhindern, wurde anstelle von Oximsilanen Acetoxysilane bei den jeweiligen Kettenverlängerungen eingesetzt, da die gebildete Essigsäure unter milderen Bedingungen vollständig aus der Reaktionsmischung entfernt werden kann.

Um festzustellen, ob sich verlängerte Polyole gebildet haben, wurden zunächst zwei Modellreaktionen unter Verwendung von Dipropylenglykol (DPG) und einem di-(Diacetoxydimethylsilan, **DADMS)** bzw. trifunktionellen Acetoxysilan (Diacetoxydimethylsilan, **TAMS)** durchgeführt. Die erhaltenen Produkte wurden anschließend mittels Elektronen-Spray-Ionisations-Spektrometrie (ESI-MS) untersucht.

**Synthese von verlängerten Modellverbindungen unter Verwendung von Dipropylenglykol (DPG) und di- bzw. trifunktionellen Acetoxysilanen**

In einem 100 mL Dreihalskolben werden 20 g destilliertes DPG vorgelegt und auf 85 °C erwärmt. Anschließend wird unter Stickstoffatmosphäre mit der korrespondierenden Menge Silan-Verbindung zur Reaktion gebracht. Dabei gelten stöchiometrische Verhältnis von 2,2:1 (DPG zu Diacetoxydimethylsilan) bzw. 3,3:1 (DPG zu Triacetoxysilan). Nach beendeter Zugabe wird zunächst bei 85 °C für 1h gerührt. Anschließend wird die Temperatur sukzessive auf 130 °C erhöht und für eine weitere Stunde bei 130 °C gerührt. Die Reaktionsmischung wurde daraufhin zunächst bei 40 mbar (1h) und später im Vollvakuum von entstandener Essigsäure befreit. Die Reaktion wird beendet, wenn kein Sieden des Kolbens mehr beobachtet wird. Das gebildete Produkt wurde schließlich per Massenspektrometrie vermessen.

**Tabelle 21: Auswertung ESI-MS-Spektren**

| 2,2 DPG + Diacetoxydimethylsilan **(DADMS)** | | 3,3 DPG + Triacetoxymethylsilan **(TAMS)** | |
|---|---|---|---|
| Theoretische Molmasse | Experimentelle Molmasse | Theoretische Molmasse | Experimentelle Molmasse |
| 324,4 | 347,2 [Produkt + Na]$^+$<br>537,3 [$(DPG)_3(SiMe_2)_2$ + Na]$^+$<br>727,4 [$(DPG)_4(SiMe_2)_3$ + Na]$^+$ | 442,5 | 175,1[(DPG)MeSi]$^+$<br>331,2[$(DPG)_2$MeSi + Na]$^+$<br>465,3[Produkt + Na]$^+$<br>639,3[$(DPG)_4(MeSi)_2$ + Na]$^+$<br>773,4[$(DPG)_5(MeSi)_2$ + Na]$^+$<br>947,5[$(DPG)_6(MeSi)_3$ + Na]$^+$ |

**Fazit:**

Anhand der durchgeführten massenspektrometrischen Untersuchungen ist zweifelsfrei erkennbar, dass die jeweilige Umsetzung von DPG mit der korrespondierenden stöchiometrischen Menge Acetoxysilan-Vernetzer zu den gewünschten Produkten mit den entsprechenden molaren Massen führt.

Darüber hinaus wird deutlich, dass die Reaktion von Dipropylenglykol mit Diacetoxydimethylsilan weniger Nebenprodukte höherer Molekülmasse liefert. Diese Signale lassen sich den entsprechenden höheren Homologen des eigentlichen Produkts zuordnen.

Neben Molekülionenpeaks höherer Molekülmasse treten im Spektrum der Umsetzung von DPG mit Triacetoxymethylsilan ebenfalls Signale in untergeordneter Menge geringerer Molekülmasse auf. Dies kann als erstes Indiz hinsichtlich der Stabilität der entstandenen Verbindungen gewertet werden und unterstützt die zuvor getroffene Annahme, dass die Stabilität der synthetisierten Verbindungen abhängig vom Substitutionsmuster am Siliziumatom ist.

Basierend auf diesen Ergebnissen und in Anlehnung an die oben beschriebene Synthese wurden mittels Acetoxysilanen verlängerte Polypropylenglykol-basierte Polyole hergestellt.

**Synthese von verlängerten Polyolen auf Basis von PolyU L 4000, 12000 und 18000 unter Verwendung von Diacetoxydimethylsilan und Triacetoxymethylsilan**

In einem 500 mL Dreihalskolben werden 200 g des jeweiligen Polyols vorgelegt und auf 85 °C erwärmt. Bei dieser Temperatur wird das Polyol zunächst von Restwasser weitestgehend befreit (ca. 1,5 h) und anschließend unter Stickstoffatmosphäre mit der korrespondierenden Menge Silan-Verbindung zur Reaktion gebracht. Dabei gelten stöchiometrische Verhältnis von 2,2:1 (Polyol zu Diacetoxydimethylsilan) bzw. 3,3:1 (Polyol zu Triacetoxymethylsilan. Nach beendeter Zugabe wird über eine Destillationsapparatur bei vermindertem Druck (85 °C, 40 mbar) die entstehende Essigsäure abdestilliert. Anschließend wird die Temperatur sukzessive auf 130 °C erhöht und weitere gebildete Essigsäure unter Vollvakuum entfernt. Die Reaktion wird beendet, wenn kein Sieden des Kolbens mehr beobachtet wird. Das gebildete Produkt wird anschließend hinsichtlich OH-Zahl, Restsäure-Gehalt und Viskosität untersucht, bevor es für weitere Reaktionen eingesetzt wird.

**Tabelle 22: OH-Zahl, Molekulargewicht und Viskosität der Polyole PolyU L 4000, PolyU L 12000 und PolyU L 18000 und nach Reaktion mit Diacetoxydimethylsilam oder Triacetoxymethylsilan**

| Polyol | OH-Zahl[1], in Klammern berechnetes MW nach[1], OH-Funktionalität = 2 | OH-Zahl[1] nach Reaktion von 2,2 Mol Polyol mit 1 Mol DADMS, in Klammern berechnetes MW nach[1], OH-Funktionalität = 2 | OH-Zahl[1] nach Reaktion von 3,3 Mol Polyol mit 1 Mol OS TAMS, in Klammer berechnetes MW nach[1], OH-Funktionalität = 3 |
|---|---|---|---|
| PolyU L | 27 (~**4155** g/mol) | 14,6 (~**7684** g/mol) | 13,3 (~**12654** g/mol) |
| 4000 | Viskosität 1000 mPa*s | Viskosität 2200 mPas | Viskosität 27000 mPa*s |
| PolyU L 12000 | 10 (~**11200** g/mol) Viskosität 6000 mPa*s | 6,2 (~**18096** g/mol) Viskosität 10000 | 2 |
| PolyU L 18000 | 6 (~**18700** g/mol) Viskosität 22000 mPa*s | 2,9 (~**38689** g/mol) Viskosität 33500 mPas | 2 |
| 1 $MW \left[\frac{g}{mol}\right] = \frac{OH-Funktionalität}{OH-Zahl} \times 56100$ <br> 2 nicht durchgeführt | | | |

**Fazit:**

Die Ergebnisse der Reaktionen, die in Tabelle 22 zusammengefasst sind, zeigen an, dass die Umsetzung der Polyole PolyU L 4000 (MW ~ 4000 g/mol), PolyU L 12000, (MW ~ 12000 g/mol) und PolyU L 18000 (MW ~ 18000 g/mol) mit Diacetoxydimethylsilan bzw. Triacetoxymethylsilan in Analogie zu den vorher beschriebenen Umsetzungen von Diacetoxydimethylsilan und Triacetoxymethylsilan mit DPG verlaufen und somit zu einem Polymerkettenaufbau führen. Die aus den OH-Zahlen rechnerisch ermittelten Molekulargewichte belegen, dass die Umsetzung des Diacetoxydimethylsilans mit den verwendeten Diolen zu einer Verdopplung des Molekulargewichts führen, im Falle der Umsetzung von Triacetoxymethylsilan mit PolyU L 4000 zu einer Verdreifachung des Molekulargewichts führt. Der Polymerkettenaufbau wird darüber hinaus durch die Viskositätserhöhung der Reaktionsprodukte untermauert.

## Patentansprüche

1. Verfahren zur Herstellung von polymeren Verbindungen (V) unter Ausbildung von Si-O-C-Bindungen durch Umsetzung isocyanatreaktiver Verbindungen (P), mit mindestens einer Silan-Verbindung (S) der allgemeinen Formel $Si(R)_m(R^a)_{4-m}$, **dadurch gekennzeichnet, dass**

   - R unabhängig voneinander H, eine optional substituierte, geradkettige oder verzweigte C1- bis C16-Alkylgruppe, eine optional substituierte, geradkettige oder verzweigte C2- bis C16-Alkenylgruppe und/oder eine optional, substituierte C4- bis C14-Arylgruppe bedeutet und m eine ganze Zahl von 0 bis 2 ist oder eine Alkoxygruppe bedeuten kann, wenn m = 1 oder 2 ist,
   - $R^a$ unabhängig voneinander ausgewählt ist aus der Gruppe bestehend aus

     • einem Hydroxycarbonsäureesterrest mit der allgemeinen Strukturformel (A):

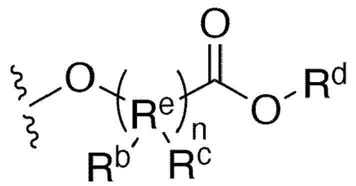

(A),

wobei

$R^b$ unabhängig voneinander H oder eine optional substituierte, geradkettige oder verzweigte C1- bis C16- Alkylgruppe oder eine optional substituierte C4- bis C14-Arylgruppe, bedeutet,
$R^c$ unabhängig voneinander H oder eine optional substituierte, geradkettige oder verzweigte C1- bis C16-Alkylgruppe oder eine optional substituierte C4- bis C14-Arylgruppe, bedeutet,
$R^d$ H oder eine optional substituierte, geradkettige oder verzweigte C1-bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
$R^e$ ein Kohlenstoffatom oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet und
n eine ganze Zahl von 1 bis 10 ist,

• einem Hydroxycarbonsäureamidrest mit der allgemeinen Strukturformel (B):

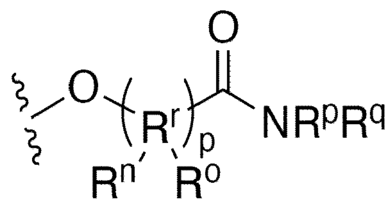

(B),

wobei

$R^n$ unabhängig voneinander H oder eine optional substituierte, geradkettige oder verzweigte C1- bis C16-Alkylgruppe oder eine optional substituierte C4- bis C14-Arylgruppe, bedeutet,
$R^o$ unabhängig voneinander H oder eine optional substituierte, geradkettige oder verzweigte C1- bis C16- Alkylgruppe oder eine optional substituierte C4- bis C14-Arylgruppe, bedeutet,
$R^p$ und $R^q$ unabhängig voneinander H oder eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet, $R^r$ ein Kohlenstoffatom oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
p eine ganze Zahl von 1 bis 10 ist,

• einem Oximrest mit der allgemeinen Strukturformel (C):

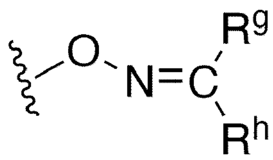

(C),

wobei
$R^g$ und $R^h$ unabhängig voneinander H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,
• einem Carbonsäureamidrest -N($R^i$)-C(O)-$R^j$,
wobei

$R^1$ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und
$R^j$ H eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,

• einem Carbonsäurerest -O-C(O)-$R^f$,
wobei
$R^f$ H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe bedeutet,
und/oder
• einem Aminrest -NH($R^l$),
wobei

$R^l$ H oder eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und
$R^j$ H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

2. Verfahren nach Anspruch 1, **dadurch gekennzeichnet, dass** die Silan-Verbindung (S) Oligomere oder Polymere sind, in welchen
$R^a$ unabhängig voneinander ausgewählt ist aus der Gruppe bestehend aus einem Hydroxycarbonsäureesterrest mit der allgemeinen Strukturformel (A'),

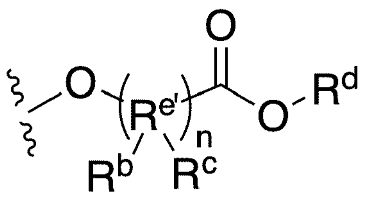

(A'),

wobei

$R^b$ und $R^c$ nicht H bedeuten,
$R^b$ nicht H und $R^c$ nicht Methyl- bedeuten,
$R^b$ nicht Methyl- und $R^c$ nicht H bedeuten,
$R^d$ wie oben definiert ist,
n = 1 ist und
$R^{e'}$ ein Kohlenstoffatom bedeutet.

3. Verfahren nach Anspruch 1 oder 2, **dadurch gekennzeichnet, dass** die isocyanatreaktive Verbindung (P) ein hydroxyfunktionalisiertes Polymer ist, welches ausgewählt ist aus der Gruppe bestehend aus Polyalkylenpolyole Polybutadien-Polyole, Polyisopren-Polyole, Polyole höher Funktionalität, Ethylenoxid (EO)-terminierte Polyoxypropylenpolyole, Polyetherpolyole, Polyesterpolyole, Styrol-Acrylnitril, Acryl-Methacrylat, (Poly)harnstoff gepfropfte oder enthaltende Polyetherpolyole, Polycarbonatpolyole, Polyethercarbonat-Polyole ($CO_2$-Polyole), Glycerin, Polyhydroxyfunktionelle Fette und Öle, Naturöl-basierte Polyesterpolyole, Polykohlenwasserstoffpolyole, Polytetrahydrofuran basierte Polyether (PTMEG), OH-terminierte Prepolymere auf der Basis der Reaktion eines Polyether- oder Polyesterols mit einem Diisocyanat, Polyalkylendiole, Polyesterpolyole, Hydroxyalkyl-funktionalisierte Polydimethylsoloxane oder Mischungen daraus.

4. Verfahren nach Anspruch 3, **dadurch gekennzeichnet, dass** das hydroxyfunktionalisierte Polymer ausgewählt ist aus der Gruppe bestehend aus Polypropylenglykol-basierte Di- und/oder Triolen, (höherfunktionelle) Polyetherpolyole, Polyesterpolyole, Naturöl-basierte Polyesterpolyole Polyethercarbonat-Polyole ($CO_2$-Polyole), Hydroxyalkylfunktionalisierte Polydimethylsoloxane oder Mischungen davon.

5. Verfahren nach einem oder mehreren der Ansprüche 1 bis 4 **dadurch gekennzeichnet, dass** ein Katalysator eingesetzt wird.

6. Verfahren nach einem oder mehreren der Ansprüche 1 bis 5, **dadurch gekennzeichnet, dass**

R unabhängig voneinander ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl-, Phenyl-, Methoxy- oder Ethoxy-;
$R^a$ für ein Carbonsäurerest -O-C(O)-$R_f$ steht, in welchem das Sauerstoffatom der Hydroxygruppe an das Siliciumatom gebunden ist und

Rf unabhängig voneinander ausgewählt ist aus der Gruppe bestehend aus Methyl-, Ethyl-, n-Propyl, Isopropyl-, n-Butyl-, Isobutyl-, 2-Ethylhexyl-, Vinyl- oder Phenyl- und
m eine ganze Zahl von 0 bis 2 ist.

7. Verfahren nach einem oder mehreren der Ansprüche 1 bis 6, wobei in der Kettenverlängerung isocyanatreaktiver Verbindungen (P), (S) im Unterschuss zu (P) vorliegt, bezogen ist auf eingesetzten Mengen in Mol.

8. Verfahren nach Anspruch 7, wobei der Unterschuss ein Verhältnis der Silan-Verbindung (S) zur isocyanatreaktiven Verbindung (P) von mindestens 1 : 1,1 darstellt, bezogen auf eingesetzten Mengen in Mol.

9. Verfahren nach einem oder mehreren der Ansprüche 1 bis 5, **dadurch gekennzeichnet, dass**

R unabhängig voneinander ausgewählt ist aus der Gruppe bestehend aus Vinyl-, Methyl-, Ethyl-, n-Propyl, Isopropyl-, n-Butyl-, Isobutyl-, sec-Butyl, tert-Butyl, Isobutyl-, 2-Ethylhexyl- oder Phenyl- und

$R^a$ unabhängig voneinander ausgewählt ist aus einem Oximrest der allgemeinen Struktur (C), wobei $R^g$ und $R^h$ unabhängig voneinander ausgewählt sind aus der Gruppe bestehend aus Vinyl-, Methyl-, Ethyl-, n-Propyl, Isopropyl-, n-Butyl-, Isobutyl-, sec-Butyl, tert-Butyl, Isobutyl-, 2-Ethylhexyl- oder Phenyl-, wobei m = 0 oder 1 ist.

**10.** Verfahren nach einem oder mehreren der Ansprüche 1 bis 5 oder 9, wobei in der Vernetzung isocyanatreaktiver Verbindungen (P), (S) und (P) zu gleichen Teilen 1 : 1 oder (S) im Überschuss zu (P) vorliegt, bezogen ist auf eingesetzten Mengen in Mol.

**11.** Verfahren nach Anspruch 10, wobei der Überschuss ein Verhältnis der Silan-Verbindung (S) zur isocyanatreaktiven Verbindung (P) von mindestens 1,1 : 1 darstellt, bezogen auf eingesetzten Mengen in Mol.

**12.** Verfahren gemäß einem oder mehreren der Ansprüche 1 bis 11, **dadurch gekennzeichnet, dass**

(i) in einem ersten Schritt eine isocyanatreaktive Verbindung (P) gemäß einem der Ansprüche 3 oder 4 sowie eine Silan-Verbindung (S) der allgemeinen Formel $Si(R)_m(R^a)_{4-m}$ gemäß einem der Ansprüche 6 bis 8 und optional mindestens ein Katalysator gemäß Anspruch 5 bereitgestellt wird,
(ii) in einem zweiten Schritt die Komponenten aus Schritt (i) unter Einsatz mechanischer und/oder thermischer Energie zusammengebracht und vermischt und aufgearbeitet werden,
(iii) in einem dritten Schritt eine Silan-Verbindung (S) der allgemeinen Formel $Si(R)_m(R_a)_{4-m}$ gemäß einem der Ansprüche 9 bis 11 zugesetzt wird sowie optional mindestens ein Katalysator gemäß Anspruch 5 sowie optional mindestens ein Additiv der Mischung aus Schritt (i) oder (ii) zugegeben wird,
(iv) in einem vierten Schritt die Komponenten aus dem Schritt (iii) unter Einsatz mechanischer und/oder thermischer Energie vermischt werden.

**13.** Verfahren gemäß einem oder mehreren der Ansprüche 1 bis 11, **dadurch gekennzeichnet, dass**

(i) in einem ersten Schritt eine isocyanatreaktive Verbindung (P) gemäß einem der Ansprüche 3 oder 4 sowie einer Silan-Verbindung (S) der allgemeinen Formel $Si(R)_m(R^a)_{4-m}$ gemäß einem der Ansprüche 9 bis 11 bereitgestellt wird,
(ii) in einem zweiten Schritt optional mindestens ein Katalysator gemäß Anspruch 5 und/oder mindestens eines Additives der Komponenten aus Schritt (i) zugesetzt wird, und
(iii) in einem dritten Schritt die Komponenten aus (i) und (ii) unter Einsatz mechanischer und/oder thermischer Energie zusammengebracht und vermischt werden.

**14.** Polymere Verbindung erhältlich durch ein Verfahren gemäß einem der Ansprüche 1 bis 8 oder 12.

**15.** Polymere Verbindung erhältlich durch ein Verfahren gemäß einem der Ansprüche 1 bis 5, 9 bis 11 oder 13.

**16.** Verwendung polymerer Verbindungen gemäß einem der Ansprüche 14 oder 15 in der Herstellung oder Bereitstellung eines Zwei-Komponenten (2K) Systems.

**17.** Verwendung polymerer Verbindungen gemäß einem der Ansprüche 14 oder 15 für die Herstellung von Weichschäumen.

**18.** Verwendung polymerer Verbindungen gemäß einem der Ansprüche 14 oder 15 für die Herstellung von ungeschäumten Polymer-Werkstoffen.

**19.** Zusammensetzung enthaltend polymere Verbindungen gemäß Anspruch 14.

**20.** Zusammensetzung enthaltend polymere Verbindungen gemäß Anspruch 14.

Europäisches Patentamt
European Patent Office
Office européen des brevets

# EUROPÄISCHER RECHERCHENBERICHT

Nummer der Anmeldung
EP 20 16 8560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/099995 A1 (IIHARA AKIHIRO [JP] ET AL) 4. April 2019 (2019-04-04) | 1-5, 7-16, 18-20 | INV. C08G77/20 C08G77/04 C07F7/08 ADD. C08G101/00 |
| A | * Absätze [0001], [0017] - Absatz [0038]; Ansprüche 1-20 * * Beispiel 28 * * Absatz [0182] * ----- | 6,17 | |
| X | US 10 011 686 B2 (UNIV VIRGINIA PATENT FOUNDATION [US]) 3. Juli 2018 (2018-07-03) | 1-8, 10-20 | |
| A | * Spalte 3, Zeile 19 - Spalte 4, Zeile 43; Ansprüche 1-32 * * Beispiel 36 * * Seite 48 * * Spalte 13, Zeile 36 - Zeile 53 * ----- | 9 | |
| X | WO 2020/000387 A1 (DOW SILICONES CORP [US]; JIANG JINGUI [CN] ET AL.) 2. Januar 2020 (2020-01-02) | 1-8, 10-16, 18-20 | |
| A | * Absätze [0001], [0004] - Absatz [0008]; Ansprüche 1-15 * * VB 1, 7-10; Absatz [0075] - Absatz [0081]; Beispiele 11-16; Tabellen 1-3 * * Absatz [0082] - Absatz [0086]; Beispiele; Tabellen 4, 5 * ----- | 9,17 | RECHERCHIERTE SACHGEBIETE (IPC) C08G C09J C07F |
| X | US 2011/124752 A1 (PESCHKO CHRISTIAN [DE] ET AL) 26. Mai 2011 (2011-05-26) | 1-8, 10-17, 19,20 | |
| A | * Absätze [0001], [0025], [0026]; Ansprüche 1-9 * * Beispiele 7, 8 * * Absätze [0121], [0122] * ----- | 9,18 | |

Der vorliegende Recherchenbericht wurde für alle Patentansprüche erstellt

3

| Recherchenort | Abschlußdatum der Recherche | Prüfer |
|---|---|---|
| München | 25. August 2020 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 16 8560

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-08-2020

| Im Recherchenbericht angeführtes Patentdokument | Datum der Veröffentlichung | Mitglied(er) der Patentfamilie | Datum der Veröffentlichung |
|---|---|---|---|
| US 2019099995 A1 | 04-04-2019 | CN 107407885 A | 28-11-2017 |
| | | EP 3276417 A1 | 31-01-2018 |
| | | JP 6686881 B2 | 22-04-2020 |
| | | JP WO2016158387 A1 | 15-02-2018 |
| | | KR 20170131835 A | 30-11-2017 |
| | | TW 201718766 A | 01-06-2017 |
| | | US 2019099995 A1 | 04-04-2019 |
| | | WO 2016158387 A1 | 06-10-2016 |
| US 10011686 B2 | 03-07-2018 | EP 2742085 A1 | 18-06-2014 |
| | | US 2015045471 A1 | 12-02-2015 |
| | | US 2017233531 A1 | 17-08-2017 |
| | | US 2018362717 A1 | 20-12-2018 |
| | | WO 2013023174 A1 | 14-02-2013 |
| WO 2020000387 A1 | 02-01-2020 | TW 202000834 A | 01-01-2020 |
| | | WO 2020000387 A1 | 02-01-2020 |
| US 2011124752 A1 | 26-05-2011 | CN 102105514 A | 22-06-2011 |
| | | DE 102008041097 A1 | 11-02-2010 |
| | | EP 2310441 A2 | 20-04-2011 |
| | | JP 5571080 B2 | 13-08-2014 |
| | | JP 2011529996 A | 15-12-2011 |
| | | KR 20110053445 A | 23-05-2011 |
| | | US 2011124752 A1 | 26-05-2011 |
| | | WO 2010015491 A2 | 11-02-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3309187 A1
- EP 1509533 A1


### In der Beschreibung aufgeführte Nicht-Patentliteratur


- *CHEMICAL ABSTRACTS,* 68082-28-0
- *CHEMICAL ABSTRACTS,* 147853-32-5